# EUROPEAN PATENT APPLICATION

(11) **EP 4 845 295 A1**
(43) Date of publication of application: **25.11.2026**
(21) Application number: 25747559.0
(22) Date of filing: 16.01.2025
(51) Int. Cl.: H04W 76/10

(54) **COMMUNICATION METHOD AND APPARATUS**

(30) Priority: 04.02.2024 CN 202410168682
(71) Applicant: Huawei Technologies Co., Ltd., Shenzhen, Guangdong 518129 (CN)
(72) Inventor: CHEN, Shuqiao, Shenzhen, Guangdong 518129 (CN); HUANG, Lei, Shenzhen, Guangdong 518129 (CN); CHITRAKAR, Rojan, Shenzhen, Guangdong 518129 (CN); LI, Yunbo, Shenzhen, Guangdong 518129 (CN)
(74) Representative: Huawei European IPR
(86) International application number: PCT/CN2025/072857
(87) International publication number: WO 2025/161987

(57) **Abstract**

A communication method and apparatus are provided, and are applied to the field of communication technologies. This application is applied to an AMP field, for example, supports WPT, WLAN, or IEEE series of protocols, for example, an IEEE 802.11 protocol related to AMP, or another protocol applicable to the IEEE 802.11 family, such as the IEEE 802.11a/b/g protocol, the IEEE 802.11n protocol, the IEEE 802.11ac protocol, the IEEE 802.11ax protocol, the IEEE 802.11be protocol, and the IEEE 802.11bn protocol. The method may include: An AMP STA and an energizing STA exchange respective capability information and respective parameter information, to set up a P2P link or a WUR link. By using the P2P link, the WUR link, or the like, the energizing STA may wake up the AMP STA or perform wireless power transfer for the AMP STA. A procedure of interaction between different STAs is improved, and communication efficiency is improved.

## Description

This application claims priority to Chinese Patent Application No. 202410168682.0, filed with the China National Intellectual Property Administration on February 4, 2024 and entitled "COMMUNICATION METHOD AND APPARATUS", which is incorporated herein by reference in its entirety.

### TECHNICAL FIELD

This application relates to the field of communication technologies, and in particular, to a communication method and apparatus.

### BACKGROUND

A conventional internet of things device usually needs to be equipped with a battery to ensure stable power supply. However, a limited lifespan of the battery significantly increases operation and maintenance costs of an internet of things network, particularly under an extreme environmental condition in which maintaining network operations and replacing batteries are considerably challenging. In addition, billions of batteries are discarded every year, and only a small portion can be effectively recycled. Meanwhile, as a quantity of internet of things devices worldwide increases, a quantity of discarded batteries also continues to increase, and consequently, severe impact is caused on the Earth's ecosystem. To resolve the foregoing problem, battery-free internet of things communication is proposed. The battery-free internet of things communication can not only improve network performance and sustainability, but can also significantly reduce a size of a device and reduce costs by removing a battery from the device, to support various emerging applications. In addition, a battery-free device is more environmentally friendly and safer for children and elderly users. Due to the wide deployment and use of an unlicensed band, a Wi-Fi technology has become a strong competitor in an internet of things network deployment. However, an existing Wi-Fi internet of things technology still cannot meet increasing application requirements. First, in an extreme environmental condition (such as a high voltage, extremely high/low temperature, and a humid environment), a conventional battery-powered device may fail to work properly. Second, many use cases require maintenance-free devices (for example, it is unnecessary/impossible to replace a conventional battery). Finally, some use cases require ultra-low complexity, an extremely small component size (for example, a thickness of only a few millimeters), a longer lifecycle, and the like.

A Wi-Fi internet of things technology based on ambient power (ambient power, AMP) has broad prospects, and can implement battery-free operations and meet requirements of various vertical industries. Such battery-free AMP devices rely on energy harvesting (energy harvesting) for operation, and energy sources include radio waves, light (sunlight), motion, heat, and the like, while also employ a relatively simple waveform design to reduce complexity and power consumption (typical peak power is possibly less than 1 mW). A combination of an AMP technology and Wi-Fi can implement a new internet of things service and expand an entire Wi-Fi ecosystem.

Therefore, an interaction manner between different devices is a problem under research by a person skilled in the art.

### SUMMARY

This application provides a communication method and apparatus, to improve a procedure of interaction between different stations (station, STA) in an AMP field, and improve communication efficiency and communication reliability.

According to a first aspect, an embodiment of this application provides a communication method. The method is applied to an AMP STA, and the AMP STA may include a device, or a chip, a functional module, or the like that may be disposed in the device. The method includes:

The ambient power AMP station STA sends a setup request frame to an energizing STA by using an access point (access point, AP), where the setup request frame includes a first capability element, and the first capability element indicates capability information of the AMP STA; the AMP STA receives a setup response frame from the energizing STA by using the AP, where the setup response frame includes a second capability element, and the second capability element indicates capability information of the energizing STA; the AMP STA sends a peer-to-peer wake-up radio (peer-to-peer wake-up radio, P2P WUR) mode setup request frame to the energizing STA, where the P2P WUR mode setup request frame includes a first mode element, and the first mode element indicates parameter information of a P2P WUR mode of the AMP STA; and the AMP STA receives a P2P WUR mode setup response frame from the energizing STA, where the P2P WUR mode setup response frame includes a second mode element, and the second mode element indicates parameter information of a P2P WUR service provided by the energizing STA.

In this embodiment of this application, the setup request frame includes the first capability element, to enable the energizing STA to effectively learn the capability information of the AMP STA; and the setup response frame includes the second capability element, to enable the AMP STA to effectively learn the capability information of the energizing STA. Therefore, both communication parties can learn capability information of each other, so that communication efficiency and communication reliability are improved. Further, by exchanging parameter information, both communication parties can improve a P2P WUR interaction procedure, further improve communication efficiency, and improve communication reliability, so that useful information is provided to subsequently wake up the AMP STA, and useful information is provided for subsequent power transfer.

In a possible implementation, the setup response frame further includes an operation element, and the operation element indicates operation information for transmitting a link keep-alive frame by the energizing STA.

In this embodiment of this application, the setup response frame includes the operation element, to enable the AMP STA to learn operation information of a link keep-alive frame subsequently received by the AMP STA, so that the AMP STA uses the operation information as a reference for an active period of a duty cycle period of the AMP STA, thereby effectively improving communication efficiency.

In a possible implementation, the setup request frame is a tunneled direct link setup (tunneled direct link setup, TDLS) setup request frame, and the setup response frame is a TDLS setup response frame.

In this embodiment of this application, the TDLS setup request frame may include the first capability element, and the TDLS setup response frame may include the second capability element. Redesigning a frame format is effectively avoided through reuse of a frame in a TDLS protocol. In addition, the TDLS setup request frame and the TDLS setup response frame include capability information, so that both communication parties can effectively learn a capability of each other, thereby improving communication efficiency.

In a possible implementation, the first capability element includes at least one of the following: a transition delay, whether a 20 MHz bandwidth high data rate WUR physical layer protocol data unit (physical layer protocol data unit, PPDU) is supported, or whether frequency division multiple access (frequency division multiple access, FDMA) is supported; or the second capability element includes at least one of the following: whether a 20 MHz bandwidth high data rate WUR physical layer protocol data unit PPDU is supported or whether frequency division multiple access FDMA is supported.

In a possible implementation, the operation element includes at least one of the following: minimum wake-up duration, a time unit of a duty cycle period, a WUR operating class, a WUR channel, a transmission period of the link keep-alive frame, or an offset of transmission start time of the link keep-alive frame.

In a possible implementation, the first mode element includes at least one of the following: an action type field, WUR parameter control, a service period of a duty cycle period, a duty cycle period, or a proposed WUR parameter; or the second mode element includes at least one of the following: an action type field, a WUR mode response status, WUR parameter control, a WUR channel offset, or duty cycle period start time.

In this embodiment of this application, the first mode element or the second mode element includes the foregoing information, so that both communication parties can learn a subsequent procedure of a P2P WUR mode or a WPT signal through negotiation, thereby further improving communication efficiency.

In a possible implementation, the AMP STA enters the P2P WUR mode or suspends the P2P WUR mode based on the P2P WUR mode setup request frame and the P2P WUR mode setup response frame.

In a possible implementation, the proposed WUR parameter includes a proposed WUR PPDU data rate and a link keep-alive frame requirement.

In a possible implementation, the method further includes: The AMP STA receives the link keep-alive frame on a WUR link, and determines, based on the link keep-alive frame, that the WUR link is valid, where the link keep-alive frame includes an identifier of the energizing STA.

In a possible implementation, the method further includes: The AMP STA receives a link wake-up frame on the WUR link, where the link wake-up frame includes an identifier of the AMP STA.

In a possible implementation, the identifier of the energizing STA is determined based on a medium access control (medium access control, MAC) address of the energizing STA and cyclic redundancy check (cyclic redundancy check, CRC), or the identifier of the AMP STA is determined based on a MAC address of the AMP STA and cyclic redundancy check CRC.

In a possible implementation, the link wake-up frame includes a type field, and the type field indicates a type of the link wake-up frame; and the link keep-alive frame includes a type field, and the type field indicates a type of the link keep-alive frame.

In a possible implementation, the method further includes: The AMP STA receives a wireless power transfer WPT signal from the energizing STA.

In a possible implementation, the method further includes: The AMP STA sends a P2P WUR mode teardown indication to the energizing STA, where the P2P WUR mode teardown indication indicates to tear down the P2P WUR service; or the AMP STA receives a P2P WUR mode teardown indication from the energizing STA, where the P2P WUR mode teardown indication indicates to tear down the P2P WUR service.

According to a second aspect, an embodiment of this application provides a communication method. The method is applied to an energizing STA, and the energizing STA may include a device, or a chip, a functional module, or the like that may be disposed in the device. The method includes:

The energizing station STA receives a setup request frame from an ambient power AMP STA by using an access point AP, where the setup request frame includes a first capability element, and the first capability element indicates capability information of the AMP STA; the energizing STA sends a setup response frame to the AMP STA by using the AP, where the setup response frame includes a second capability element, and the second capability element indicates capability information of the energizing STA; the energizing STA receives a P2P WUR mode setup request frame from the AMP STA, where the P2P WUR mode setup request frame includes a first mode element, and the first mode element indicates parameter information of a P2P WUR mode of the AMP STA; and the energizing STA sends a P2P WUR mode setup response frame to the AMP STA, where the P2P WUR mode setup response frame includes a second mode element, and the second mode element indicates parameter information of a P2P WUR service provided by the energizing STA.

In a possible implementation, the setup response frame further includes an operation element, and the operation element indicates operation information for transmitting a link keep-alive frame by the energizing STA.

In a possible implementation, the setup request frame is a tunneled direct link setup TDLS setup request frame, and the setup response frame is a TDLS setup response frame.

In a possible implementation, the first capability element includes at least one of the following: a transition delay, whether a 20 MHz bandwidth high data rate WUR physical layer protocol data unit PPDU is supported, or whether frequency division multiple access FDMA is supported; or the second capability element includes at least one of the following: whether a 20 MHz bandwidth high data rate WUR physical layer protocol data unit PPDU is supported or whether frequency division multiple access FDMA is supported.

In a possible implementation, the operation element includes at least one of the following: minimum wake-up duration, a time unit of a duty cycle period, a WUR operating class, a WUR channel, a transmission period of the link keep-alive frame, or an offset of transmission start time of the link keep-alive frame.

In a possible implementation, the first mode element includes at least one of the following: an action type field, WUR parameter control, a service period of a duty cycle period, a duty cycle period, or a proposed WUR parameter; or the second mode element includes at least one of the following: an action type field, a WUR mode response status, WUR parameter control, a WUR channel offset, or duty cycle period start time.

In a possible implementation, the method further includes: sending the link keep-alive frame on a WUR link, where the link keep-alive frame includes an identifier of the energizing STA.

In a possible implementation, the method further includes: sending a link wake-up frame on the WUR link, where the link wake-up frame includes an identifier of the AMP STA.

In a possible implementation, the identifier of the energizing STA is determined based on a medium access control MAC address of the energizing STA and cyclic redundancy check CRC, or the identifier of the AMP STA is determined based on a MAC address of the AMP STA and cyclic redundancy check CRC.

In a possible implementation, the method further includes: The energizing STA sends a wireless power transfer WPT signal to the AMP STA.

In a possible implementation, the method further includes: The energizing STA receives a P2P WUR mode teardown indication from the AMP STA, where the P2P WUR mode teardown indication indicates to tear down the P2P WUR service; or the energizing STA sends a P2P WUR mode teardown indication to the AMP STA, where the P2P WUR mode teardown indication indicates to tear down the P2P WUR service.

According to a third aspect, an embodiment of this application provides an AMP STA, configured to perform the method according to the first aspect or any possible implementation. The AMP STA includes a module configured to perform the method according to the first aspect or any possible implementation.

According to a fourth aspect, an embodiment of this application provides an energizing STA, configured to perform the method according to the second aspect or any possible implementation. The energizing STA includes a module configured to perform the method according to the second aspect or any possible implementation.

According to a fifth aspect, an embodiment of this application provides an AMP STA. The AMP STA includes a processor configured to perform the method according to the first aspect or any possible implementation. The processor is configured to execute a program stored in a memory. When the program is executed, the method according to the first aspect or any possible implementation is performed.

In a possible implementation, the memory is located outside the AMP STA.

In a possible implementation, the memory is located in the AMP STA.

In this embodiment of this application, the processor and the memory may alternatively be integrated into one component. In other words, the processor and the memory may alternatively be integrated together. For example, the AMP STA may be a chip.

In a possible implementation, the AMP STA further includes a transceiver. The transceiver is configured to receive information or send information.

According to a sixth aspect, an embodiment of this application provides an energizing STA. The energizing STA includes a processor configured to perform the method according to the second aspect or any possible implementation. The processor is configured to execute a program stored in a memory. When the program is executed, the method according to the second aspect or any possible implementation is performed.

In a possible implementation, the memory is located outside the energizing STA.

In a possible implementation, the memory is located in the energizing STA.

In this embodiment of this application, the processor and the memory may alternatively be integrated into one component. In other words, the processor and the memory may alternatively be integrated together. For example, the energizing STA may be a chip.

In a possible implementation, the energizing STA further includes a transceiver. The transceiver is configured to receive information or send information.

According to a seventh aspect, an embodiment of this application provides an AMP STA. The AMP STA includes a logic circuit and an interface. The logic circuit is coupled to the interface. The interface is configured to input and/or output information. The logic circuit is configured to perform the method according to the first aspect or any possible implementation.

According to an eighth aspect, an embodiment of this application provides an energizing STA. The energizing STA includes a logic circuit and an interface. The logic circuit is coupled to the interface. The interface is configured to input and/or output information. The logic circuit is configured to perform the method according to the second aspect or any possible implementation.

According to a ninth aspect, an embodiment of this application provides a computer-readable storage medium. The computer-readable storage medium is configured to store a computer program, and when the computer program is run on a computer, the method according to either of the first aspect and the second aspect or any possible implementation is performed.

According to a tenth aspect, an embodiment of this application provides a computer program product. When the computer program product is run on a computer, the method according to either of the first aspect and the second aspect or any possible implementation is performed.

According to an eleventh aspect, an embodiment of this application provides a computer program. When the computer program is run on a computer, the method according to either of the first aspect and the second aspect or any possible implementation is performed.

According to a twelfth aspect, an embodiment of this application provides a communication system. The communication system includes an AMP STA and/or an energizing STA, the AMP STA is configured to perform the method according to the first aspect or any possible implementation of the first aspect, and the energizing STA is configured to perform the method according to the second aspect or any possible implementation of the second aspect.

### BRIEF DESCRIPTION OF DRAWINGS

FIG. 1 is a diagram of a communication system according to an embodiment of this application;
FIG. 2 is a diagram of an architecture of a link between an energizing STA and an AMP STA according to an embodiment of this application;
FIG. 3 is a schematic flowchart of a communication method according to an embodiment of this application;
FIG. 4 is a schematic flowchart of a capability exchanging method according to an embodiment of this application;
FIG. 5a is a diagram of a format of a P2P WUR capability element according to an embodiment of this application;
FIG. 5b is a diagram of a format of a "supported band" field according to an embodiment of this application;
FIG. 5c is a diagram of a format of a WUR capability information field according to an embodiment of this application;
FIG. 5d is a diagram of a format of a WUR capability information field according to an embodiment of this application;
FIG. 6a is a diagram of a format of a P2P WUR operation element according to an embodiment of this application;
FIG. 6b is a diagram of a format of a WUR operation information field according to an embodiment of this application;
FIG. 7 is a diagram of a procedure of exchanging parameter information of a P2P WUR mode according to an embodiment of this application;
FIG. 8a is a diagram of a format of a TDLS data frame according to an embodiment of this application;
FIG. 8b is a diagram of a format of a WUR action frame according to an embodiment of this application;
FIG. 8c and FIG. 8d are diagrams of formats of a P2P WUR mode element according to an embodiment of this application;
FIG. 8e and FIG. 8f are diagrams of formats of a WUR parameter field according to an embodiment of this application;
FIG. 9a is a diagram of a duty cycle period according to an embodiment of this application;
FIG. 9b is a diagram of an interaction procedure according to an embodiment of this application;
FIG. 10a is a diagram of a format of a link wake-up frame according to an embodiment of this application;
FIG. 10b is a diagram of a format of a link wake-up frame according to an embodiment of this application;
FIG. 10c is a diagram of a format of a frame control field according to an embodiment of this application;
FIG. 10d is a diagram of a format of a link keep-alive frame according to an embodiment of this application;
FIG. 11 is a diagram of teardown of a P2P WUR mode according to an embodiment of this application;
FIG. 12a is a diagram of a format of a P2P WUR mode teardown indication according to an embodiment of this application;
FIG. 12b is a diagram of a format of a P2P WUR mode teardown indication according to an embodiment of this application;
FIG. 13 is a schematic flowchart of a communication method according to an embodiment of this application;
FIG. 14 is a diagram of a structure of a STA according to an embodiment of this application;
FIG. 15 is a diagram of a structure of a STA according to an embodiment of this application; and
FIG. 16 is a diagram of a format of a STA according to an embodiment of this application.

### DESCRIPTION OF EMBODIMENTS

For ease of understanding technical solutions in this application, the following further describes this application with reference to accompanying drawings.

Terms "first", "second", and the like in the specification, claims, and accompanying drawings of this application are merely used to distinguish between different objects, and are not used to describe a specific order. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with the embodiments may be included in at least one embodiment of this application. The phrase shown in various locations in the specification may not necessarily refer to a same embodiment, and is not an independent or optional embodiment exclusive from another embodiment. It may be understood explicitly and implicitly by a person skilled in the art that the embodiments described herein may be combined with other embodiments.

In this application, "at least one (item)" means one or more, "a plurality of" means two or more, "at least two (items)" means two or three or more, and "and/or" is used to describe an association relationship between associated objects, which indicates that three relationships may exist. For example, "A and/or B" may indicate: only A exists, only B exists, and both A and B exist. A and B may be singular or plural. "Or" indicates that two relationships may exist, for example, only A exists and only B exists. When A and B are not mutually exclusive, it may indicate that three relationships exist, for example, only A exists, only B exists, and both A and B exist. The character "/" generally indicates an "or" relationship between the associated objects. "At least one of the following" or a similar expression thereof means any combination of these items. For example, at least one of a, b, or c may represent: a, b, c, "a and b", "a and c", "b and c", or "a and b and c".

In this application, the "indication" may include a direct indication, an indirect indication, an explicit indication, and an implicit indication. When a piece of indication information is described as indicating A, it may be understood that the indication information carries A, directly indicates A, or indirectly indicates A.

In this application, information indicated by the indication information is referred to as to-be-indicated information. In a specific implementation process, there are many manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, and there is an association relationship between the other information and the to-be-indicated information. Alternatively, only a part of the to-be-indicated information may be indicated, and the other part of the to-be-indicated information is known or pre-agreed on. For example, specific information may alternatively be indicated by using an arrangement sequence of a plurality of pieces of information that is pre-agreed on (for example, stipulated in a protocol), to reduce indication overheads to some extent. In addition, the to-be-indicated information may be sent as a whole, or may be divided into a plurality of pieces of sub-information for separate sending. In addition, sending periods and/or sending occasions of the sub-information may be the same or may be different.

In this application, "sending" and "receiving" indicate signal transmission directions. For example, "sending information to XX" may be understood as that a destination end of the information is XX, and may include direct sending through an air interface, or include indirect sending through an air interface by another unit or module. "Receiving information from YY" may be understood as that a source end of the information is YY, and may include direct receiving from YY through an air interface, or may include indirect receiving from YY via another unit or module through an air interface. "Sending" may also be understood as "outputting" of a chip interface, and "receiving" may also be understood as "inputting" of the chip interface. In other words, sending and receiving may be performed between devices, for example, between a network device and a terminal device, or may be performed within a device. For example, sending or receiving is performed between components, modules, chips, software modules, or hardware modules in a device by using a bus, a cable, or an interface.

The field involved in embodiments of this application is described below.

Technical solutions provided in embodiments of this application may be applied to an AMP field, for example, may support wireless power transfer (wireless power transfer, WPT), a wireless local area network (wireless local area network, WLAN), or an institute of electrical and electronics engineers (institute of electrical and electronics engineers, IEEE) series of protocols.

The IEEE 802.11 AMP topic interest group (topic interest group, TIG) and study group (study group, SG) are established in May 2022 and March 2023, respectively. The AMP task group (task group, TG) is expected to be established in May 2024 and initiate the formulation of an IEEE 802.11 AMP standard specification. For example, an AMP device involved in the AMP field may meet at least one of the following features: (1) There is a data communication mode at least on a sub-1 GHz (Sub-1 GHz) band. (2) There is a data communication mode at least on a 2.4 GHz band, and a communication access category (access category, AC) is set to access category_background (access category_background, AC_BK). (3) There is a WPT mode at least on the sub-1 GHz band to indicate radio frequency (radio frequency, RF) energy harvesting (energy harvesting). For example, an application scenario of AMP includes but is not limited to a smart home, a smart farm, a smart factory, logistics/warehousing, supermarket delivery, indoor positioning, a data center, and the like.

The method provided in embodiments of this application may be applicable to an IEEE 802.11 protocol related to AMP, or may be applicable to another protocol in the IEEE 802.11 family, such as the 802.11a/b/g protocol, the 802.11n protocol, the 802.11ac protocol, the 802.11ax protocol, the 802.11be protocol, the 802.11bn protocol (802.11bn is also referred to as Wi-Fi 8, or referred to as ultra-high reliability (ultra-high reliability, UHR), ultra-high reliability and throughput (ultra-high reliability and throughput, UHRT)), or a next-generation protocol. Examples are not enumerated one by one. The technical solutions provided in embodiments of this application may be further applied to a wireless personal area network (wireless personal area network, WPAN) or the like that is based on millimeter wave (millimeter wave, MMW) and ultra wideband (ultra wideband, UWB) technologies. For example, the method provided in embodiments of this application may be applied to IEEE 802.15 series of protocols, such as the 802.15.4a protocol, the 802.15.4z protocol, or the 802.15.4ab protocol, or a future-generation UWB WPAN protocol. Examples are not enumerated one by one. The technical solutions provided in embodiments of this application may be further applied to the following communication systems, for example, an internet of things (internet of things, IoT) system, vehicle-to-everything (vehicle-to-everything, V2X, where X may represent everything), device-to-device (device-to-device, D2D), a narrowband internet of things (narrowband internet of things, NB-IoT) system, a long term evolution (long term evolution, LTE) system, a 5th generation (5th-generation, 5G) communication system, and a new communication system emerging in future communication development. For example, the V2X may include vehicle-to-vehicle (vehicle-to-vehicle, V2V) communication, vehicle-to-infrastructure (vehicle-to-infrastructure, V2I) communication, vehicle-to-pedestrian (vehicle-to-pedestrian, V2P) communication, vehicle-to-network (vehicle-to-network, V2N) communication, or the like.

With the popularization of AMP application scenarios, an AMP system is to be used in more scenarios or industries. For example, the AMP system is applied to the internet of things industry, the internet of vehicles industry or the banking industry, enterprise offices, stadiums and exhibition halls, concert halls, hotel guest rooms, dormitories, hospital wards, classrooms, supermarkets, plazas, streets, production workshops, warehouses, and the like. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, and a washing machine) in a smart home, an internet of things node, an entertainment terminal (for example, a wearable device such as an augmented reality (augmented reality, AR) device or a virtual reality (virtual reality, VR) device), a smart device (for example, a printer, a projector, a loudspeaker, or a speaker) in smart office, an internet of vehicles device in the internet of vehicles, an infrastructure in a daily life scenario (for example, a vending machine, a self-service navigation console of a supermarket, a self-service cashier device, and a self-service ordering machine), a device in a large sports and music venue, and the like.

Although embodiments of this application are mainly based on a network of the IEEE 802.11 series of standards, various aspects in embodiments of this application may be extended to other networks that use various standards or protocols, for example, Bluetooth (Bluetooth), a high performance radio LAN (high performance radio LAN, HIPERLAN) (a wireless standard similar to the IEEE 802.11 standard), a wide area network (wide area network, WAN), or another network known or developed in the future.

Apparatuses in embodiments of this application are described below.

### 1. Apparatus for RF energy harvesting

Ambient power may include but is not limited to energy existing in an environment, such as radio frequency energy (that is, RF energy), kinetic energy, thermal energy, and solar energy. An essence of RF energy harvesting is to convert RF energy such as an RF signal into electric energy such as a direct current (direct current, DC) (RF-DC). For example, the apparatus for RF energy harvesting may convert RF energy harvested by the apparatus into electric energy and then store the electric energy in an energy storage unit (such as a capacitor or a battery), or may harvest RF energy and then directly use the harvested RF energy to drive a logic circuit, a digital chip, a sensing component, or the like to complete at least one of the following functions: modulating a reflected signal, sending a reflected signal, and collecting and processing sensing information. The reflected signal shown herein is a reflected signal in backscatter communication (backscatter).

In embodiments of this application, the apparatus for RF energy harvesting may also be referred to as an apparatus for converting RF energy into DC, an apparatus that can implement RF energy harvesting, a low-power apparatus, an AMP station (station, STA), or the like. A specific name of the apparatus is not limited in embodiments of this application. Herein, that the AMP STA may convert RF energy harvested by the AMP STA into electric energy is merely an example. For example, the AMP STA may also convert the RF energy into other energy, and the other energy may be used to implement a function similar to the electric energy. For ease of description, the apparatus for RF energy harvesting is referred to as an AMP STA in the following descriptions. The AMP STA may be an entire low-power device, or may be a chip, a processing system, a functional module, or the like that is mounted in the entire device. The device in which the chip, the processing system, or the functional module is mounted may implement a method, a function, and the like in embodiments of this application under control of the chip, the processing system, or the functional module.

The AMP STA may be a low-power IoT device that supports RF energy harvesting (energy harvesting). The AMP STA may support receiving of radio frequency energy or communication or sensing by using an AMP protocol or a WLAN protocol, and has a capability of wirelessly transferring power to, communicating with, or sensing another non-AP STA or access point in an AMP network or a WLAN network.

### 2. Apparatus for providing RF energy

The apparatus for providing RF energy (which is alternatively referred to as an apparatus with a charging function) may provide RF energy for an AMP STA. For example, the apparatus for providing RF energy may provide RF energy for the AMP STA by sending a WPT signal to the AMP STA. The WPT signal shown herein is an RF signal. For example, the WPT signal may also be referred to as a power transfer signal, a signal used to transmit RF energy, a signal used for RF energy harvesting, or the like. A name of the WPT signal is not limited in embodiments of this application.

For ease of description, the apparatus for providing RF energy is referred to as an energizing STA (energizing STA), an energizer, an energy STA, or the like in the following descriptions. The energizing STA may be configured to provide RF energy for the AMP STA. In addition, the energizing STA may further communicate with an AP by using a Wi-Fi protocol. For example, the energizing STA may be a non-AP STA, or may be a relay node (relay node) (which is alternatively referred to as a repeater, a relay apparatus, or the like). The relay node may be configured to amplify a signal, compensate for signal attenuation, and support communication (for example, including long-distance communication). A specific product form or type of the energizing STA is not limited in embodiments of this application.

The AMP STA or the energizing STA shown in embodiments of this application is different classifications of STAs. The following description of the STA is also applicable to the AMP STA or the energizing STA. For example, the STA may support communication, sensing, or power transferring by using a WLAN protocol, and has a capability of communicating with, sensing, or transmitting energy to another non-AP STA or access point in a WLAN network. In a WLAN system, the station may be referred to as a non-access point station (non-access point station, non-AP STA). For example, the STA is any user communication device that allows a user to communicate with, sense, or transfer power to an AP and further communicate with a WLAN. The apparatus having a wireless communication function may be an entire device, or may be a chip, a processing system, or a functional module that is mounted in the entire device. The device in which the chip, the processing system, or the functional module is mounted may implement a method and a function in embodiments of this application under control of the chip, the processing system, or the functional module. For example, the STA may be a wireless communication chip, a wireless sensor, a wireless communication terminal, or the like, and may also be referred to as a user. For another example, the STA may be a mobile phone that supports a Wi-Fi communication function, a tablet computer that supports a Wi-Fi communication function, a set-top box that supports a Wi-Fi communication function, a smart television that supports a Wi-Fi communication function, a smart wearable device that supports a Wi-Fi communication function, a vehicle-mounted communication device that supports a Wi-Fi communication function, a computer that supports a Wi-Fi communication function, or the like. Certainly, the STA may alternatively be a chip, a processing system, or a module in the foregoing devices in various forms, to implement a method and a function in embodiments of this application.

### 3. Access point (access point, AP)

The AP is an apparatus having a wireless communication function, supports wireless power transfer, communication, or sensing that is performed by using a WLAN protocol (including an AMP protocol), has a function of performing wireless power transfer, communication, or sensing with another device (for example, a non-access point station (non-access point station, non-AP STA) or another access point or AMP STA) in an AMP network or a WLAN network, and certainly, may further have a function of communicating with or sensing another device. For example, the AP is an apparatus providing a service for a non-AP STA, or the AP is an apparatus providing a service for an AMP STA, and may support 802.11 series of protocols, a subsequent protocol, or the like. For another example, the AP may be an AP belonging to a multi-link device (multi-link device, MLD). For example, the multi-link device (multi-link device, MLD) means that the device has a plurality of APs at the same time, and the APs separately work on different bands or channels. The multi-link device includes a plurality of APs that belong to the multi-link device. The APs that belong to the multi-link device may be physical APs, or may be logical APs. Each AP may work on one link, one band, one channel, or the like.

The AP is equivalent to a bridge that connects a wired network and a wireless network. The AP is mainly used to connect wireless network clients together, and then connect a wireless network to the Ethernet. The apparatus having the wireless communication function may be an entire device, or may be a chip, a processing system, a functional module, or the like mounted in the entire device. The device in which the chip, the processing system, or the functional module is mounted may implement a method, a function, and the like in embodiments of this application under control of the chip, the processing system, or the functional module. For example, the access point may be an access point for a terminal (for example, a mobile phone) to access a wired (or wireless) network, and is mainly deployed in a home, a building, and a park. A typical coverage radius is tens to hundreds of meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like. For another example, the AP may be configured to transmit energy for the AMP STA, and the like. Certainly, the AP may alternatively be a chip, a processing system, or a module in the foregoing devices in various forms, to implement a method and a function in embodiments of this application. For example, the AP may also include an AMP AP.

A system in embodiments of this application is described below.

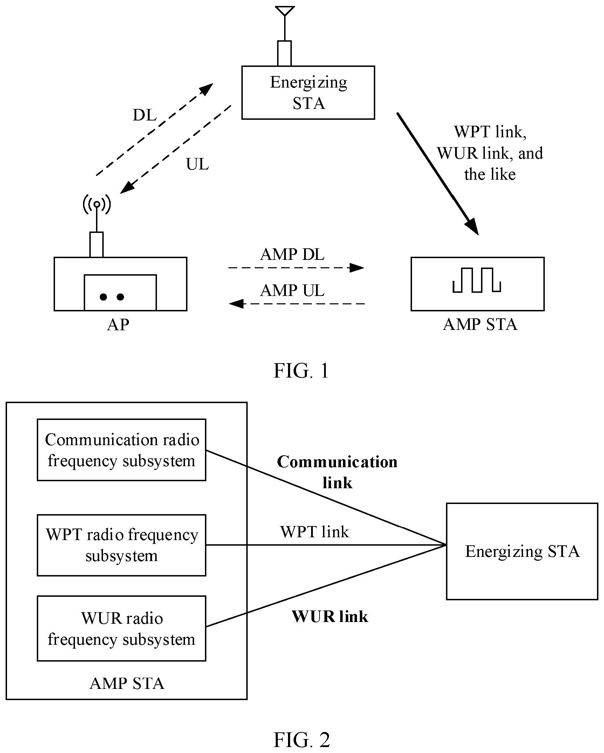

The system shown in embodiments of this application relates to waking up an AMP STA by an energizing STA, or may be extended to waking up a non-AP STA of any type by another non-AP STA, or the like. FIG. 1 is a diagram of a communication system according to an embodiment of this application. The system shown in FIG. 1 includes an AP, an AMP STA, and an energizing STA. The AP is separately associated with the AMP STA or the energizing STA. The AP may separately communicate with the AMP STA or the energizing STA. The AMP STA is a low-power device and has an energy harvesting function. The energizing STA may be a charging device (for example, may be a charging device dedicated to AMP), and is configured to wirelessly transfer power to the AMP STA, so that the energizing STA can meet daily running of the AMP STA. A wireless link may exist between the energizing STA and the AMP STA. The wireless link may include but is not limited to a communication link (for example, a P2P communication link), a WPT link, a WUR link, or the like. For example, the P2P communication link may be used to support a WPT function. For example, the P2P communication link may be used to transmit signaling related to a WPT signal. For description of the link between the energizing STA and the AMP STA, further refer to FIG. 2. Details are not described herein.

To further reduce power consumption of the AMP STA, the energizing STA may provide P2P WUR service support for the AMP STA, so that the AMP STA can enter a P2P WUR mode. The P2P WUR mode between the energizing STA and the AMP STA may be independent of a WUR mode between the AMP STA and an AP. The P2P WUR mode shown in embodiments of this application may also be referred to as a low-power mode, a power saving mode, an energy saving mode, or the like. A specific name of the P2P WUR mode is not limited in embodiments of this application.

An AMP downlink (downlink, DL) in FIG. 1 means a downlink from the AP to the AMP STA. An AMP uplink (uplink, UL) means an uplink from the AMP STA to the AP. The AMP DL or the AMP UL may also be referred to as an AMP-based wireless link. For example, the wireless link may include a communication link or the like. For example, the AP and the AMP STA may communicate with each other or sense each other by using the wireless link. For example, the AMP DL or the AMP UL may support a 2.4 GHz band or a sub-1 GHz (Sub-1 GHz) band. For example, the AMP DL and the AMP UL may support a PPDU format in a currently existing Wi-Fi protocol (such as the 802.11b/g/n protocol). Certainly, the AMP DL and the AMP UL may also support a PPDU format in another subsequent Wi-Fi protocol, and the like. Examples are not enumerated herein. For another example, the AMP DL and the AMP UL may support a PPDU format in an AMP protocol, for example, a new PPDU format that appears subsequently. A PPDU format used for communication between the AP and the AMP STA is not limited in embodiments of this application.

UL or DL in FIG. 1 may support a sub-1 GHz band, a 2.4 GHz band, a 5 GHz band, a 6 GHz band, or the like. Examples are not enumerated one by one herein. UL or DL in FIG. 1 may support a Wi-Fi protocol (such as the 802.11b/g/n/ac/ax/be/bn protocol), another communication protocol, or the like. This is not limited in embodiments of this application.

The AMP UL, the AMP DL, the UL, and the DL shown in embodiments of this application are all wireless links. A PPDU format supported by the AMP UL and the AMP DL may be different from a PPDU format supported by the UL and the DL. For example, the UL and the DL may support more bands or more PPDU formats. For another example, the PPDU format supported by the AMP UL and the AMP DL may be an AMP PPU, and a format of the AMP PPDU is different from an existing PPDU format in a Wi-Fi protocol. For another example, a protocol supported by the UL and the DL may not be limited to the Wi-Fi protocol. Differences between the wireless links are not enumerated herein.

The foregoing descriptions about bands or PPDU formats of the AMP UL, the AMP DL, the UL, and the DL are also applicable to information transmitted on each link. For specific information about transmission on different links, refer to the following descriptions. Details are not described herein.

Types of the apparatuses shown in FIG. 1 are merely examples, and do not represent a limitation on types of the AP, the AMP STA, and the energizing STA in embodiments of this application. In addition, a quantity of the apparatuses shown in FIG. 1 is merely an example. In specific implementation, there may be more or fewer apparatuses. This is not limited in embodiments of this application. The systems shown in FIG. 1 are merely examples. With progress of standards, another type of topology structure may appear subsequently. However, any topology structure that appears shall fall within the protection scope of embodiments of this application provided that the topology structure can be applicable to an interaction procedure shown below.

FIG. 2 is a diagram of an architecture of a link between an energizing STA and an AMP STA according to an embodiment of this application. As shown in FIG. 2, there may be a communication link (comm. link), a WPT link (WPT link), and a WUR link (WUR link) between the energizing STA and the AMP STA. The three links may respectively correspond to a communication radio frequency subsystem, a WPT radio frequency subsystem, and a WUR radio frequency subsystem in the AMP STA. An internal product form of each subsystem is not limited in embodiments of this application.

The WPT link may be used to transmit a WPT signal. In other words, a link used to transmit the WPT signal may be referred to as the WPT link, a P2P WPT link, or the like. The WPT link may also be referred to as a power transfer link or the like. A specific name of the WPT link is not limited in embodiments of this application. For example, the WPT link may support a 2.4 GHz band or a sub-1 GHz band. The communication link may be used to transmit information for assisting a WPT operation and a WUR operation, and the like. The WUR link may be used to transmit a wake-up signal from the energizing STA to the AMP STA. For example, the WUR link may be used to transmit a link keep-alive frame or a link wake-up frame. For example, the communication link may be used to transmit at least one of the following: a TDLS setup request frame, a TDLS setup response frame, a P2P WUR mode setup request frame, a P2P WUR mode setup response frame, a teardown frame, and the like.

The WPT link, the WUR link, and the communication link shown in embodiments of this application are distinguished from each other in terms of functions. In specific implementation, bands supported by these links may be the same or different. For example, at least two of the foregoing three links may support different bands. The communication link may include a P2P communication link. For example, the WUR link may be a P2P communication link. As an example, the WPT link may not be a P2P communication link. As another example, the WPT link may alternatively be a P2P link. Whether the WPT link is a P2P communication link is not limited in embodiments of this application.

In an AMP field, a specific interaction procedure for how the energizing STA wakes up the AMP STA is not provided at a protocol layer.

In view of this, embodiments of this application provide a communication method and apparatus, to improve an interaction procedure between apparatuses, and improve a related P2P WUR procedure between an AMP STA and an energizing STA from a protocol layer.

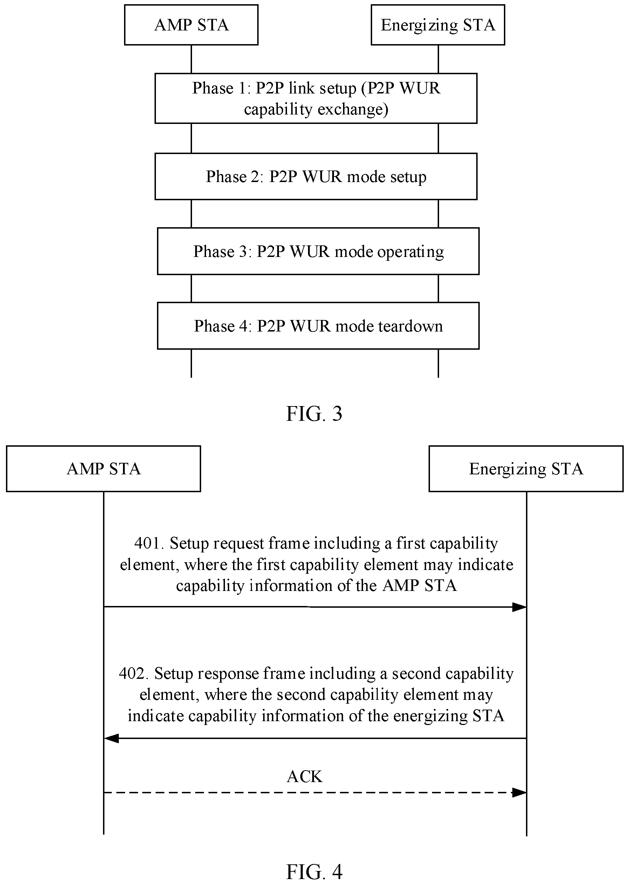

FIG. 3 is a schematic flowchart of a communication method according to an embodiment of this application. An interaction phase of the communication method provided in this application includes at least one of the following phases. It should be understood that the following phases may interact with each other, or may be implemented independently of each other.

For example, the interaction phase of the communication method may include a capability exchange (capabilities exchange) phase (Phase 1 shown below), a P2P WUR mode setup and teardown (mode setup & teardown) phase (Phase 2 and Phase 4 shown below), and a wake-up operation and link keep-alive (wake-up and keep-alive) phase in a P2P WUR mode (Phase 3 shown below). Names of the phases shown herein are merely examples, and should not be construed as a limitation on embodiments of this application.

### Phase 1:

Phase 1 may also be referred to as a capability exchange phase. An AMP STA and an energizing STA may exchange respective capabilities. In a process in which the AMP STA and the energizing STA set up a P2P communication link through frame exchange, the AMP STA and the energizing STA may send capability information to each other. The capability information may include P2P WUR capability information. When distinguished from a protocol perspective, the P2P communication link may include but is not limited to the following links: tunneled direct link setup (tunneled direct link setup, TDLS), Bluetooth (Bluetooth), or any other wireless communication direct link. The AMP STA and the energizing STA may determine, by exchanging the capability information, whether the AMP STA and the energizing STA can support a related P2P WUR function. For descriptions of the related P2P WUR function, refer to FIG. 4.

For example, information exchanged by the energizing STA and the AMP STA may include a transmission channel and a period of a link keep-alive frame, and a time unit of a duty cycle period. Optionally, the foregoing information may further include P2P WUR function support information. The foregoing information may be included in a management frame, a control frame, or a data frame.

FIG. 4 is a schematic flowchart of a capability exchanging method according to an embodiment of this application. As shown in FIG. 4, the method includes the following steps.

401. An AMP STA sends a setup request frame to an energizing STA by using an AP, where the setup request frame includes a first capability element, and the first capability element may indicate capability information of the AMP STA. Correspondingly, the energizing STA receives the setup request frame.

The first capability element may carry P2P WUR function support information of the AMP STA, that is, P2P WUR capability information. For example, the P2P WUR function support information may indicate a parameter of a P2P WUR function supported by the AMP STA. For example, the P2P WUR function support information may include the following fields: a transition delay, support for a 20 MHz high data rate WUR PPDU, and support for frequency division multiple access (which is alternatively referred to as WUR support for frequency division multiple access). The P2P WUR function support information may also be referred to as P2P WUR capability information.

For example, the setup request frame may be a TDLS setup request (TDLS setup request) frame. The first capability element may be referred to as a P2P WUR capability (P2P WUR capabilities) element. For ease of description, the following uses the P2P WUR capability element as an example to describe the first capability element shown in this embodiment of this application. For descriptions of the P2P WUR capability element, refer to the following descriptions. Details are not described herein.

402. The energizing STA sends a setup response frame to the AMP STA by using the AP, where the setup response frame may include a second capability element, and the second capability element may indicate capability information of the energizing STA. Correspondingly, the AMP STA receives the setup response frame.

The second capability element may carry P2P WUR function support information of the energizing STA. For example, the P2P WUR function support information may indicate a parameter of a P2P WUR function supported by the energizing STA. For example, the P2P WUR function support information may include the following fields: support for a 20 MHz high data rate WUR PPDU, and support for frequency division multiple access. For descriptions of the P2P WUR function support information, refer to the following descriptions.

For example, the setup response frame may further include an operation element, and the operation element may indicate operation information for transmitting a link keep-alive frame by the energizing STA. The operation element may include at least one of the following fields: minimum wake-up duration, a time unit of a duty cycle period, a WUR operating class, a WUR channel, a WUR connection keep-alive period (which is alternatively referred to as a transmission period of the link keep-alive frame, or a WUR active period), or an offset of target WUR link keep-alive frame transmission time (target WUR keep-alive frame transmission time, TWKTT) (Offset of TWKTT) (which is alternatively referred to as an offset of transmission start time of the link keep-alive frame). For descriptions of the operation element, refer to the following descriptions.

For example, the setup response frame may be a TDLS setup response (TDLS setup response) frame. The second capability element may be referred to as a P2P WUR capability element. The operation element may be referred to as a P2P WUR operation (P2P WUR operation) element. For ease of description, the following uses the P2P WUR operation element as an example to describe the second capability element shown in this embodiment of this application. For descriptions of the P2P WUR operation element, refer to the following descriptions. Details are not described herein again.

Because no P2P communication link is set up between the AMP STA and the energizing STA, the AMP STA may send the setup request frame to the energizing STA by using the AP, and the energizing STA may send the setup response frame to the AMP STA by using the AP.

Optionally, after receiving the setup response frame, the AMP STA may further send feedback information. The feedback information may be used to confirm that the AMP STA has received the setup response frame. Alternatively, the feedback information may be used to confirm that the P2P communication link has been set up, or the like. Alternatively, the feedback information may be used to confirm that the AMP STA has learned the capability information of the energizing STA. For example, the feedback information may include an acknowledgement (acknowledgement, ACK). The ACK may be carried in a TDLS setup confirm (TDLS setup confirm) frame. The TDLS setup confirm frame may indicate that a TDLS link is successfully set up and exchange of P2P WUR capability information is completed.

The P2P WUR capability element in embodiments of this application is described below.

A quantity of bits (or a quantity of bytes) occupied by each frame, each field, or each element, a sequence, and the like that are provided in the accompanying drawings in embodiments of this application are merely examples, and should not constitute a limitation on a frame format, a frame length, a sequence of fields, or the like that is provided in embodiments of this application. Names of frames and included fields in the accompanying drawings in embodiments of this application are merely examples, and should not constitute a limitation on the frames provided in embodiments of this application. For ease of description, embodiments shown in this application are shown by using a "field" as an example, and a "field", a "sub-field", an "element", a "sub-element", and the like are not specifically distinguished. Although the "field", the "sub-field", the "element", and the "sub-element" are not specifically distinguished in embodiments shown in this application, a person skilled in the art may adaptively distinguish between relationships between the fields shown in embodiments of this application.

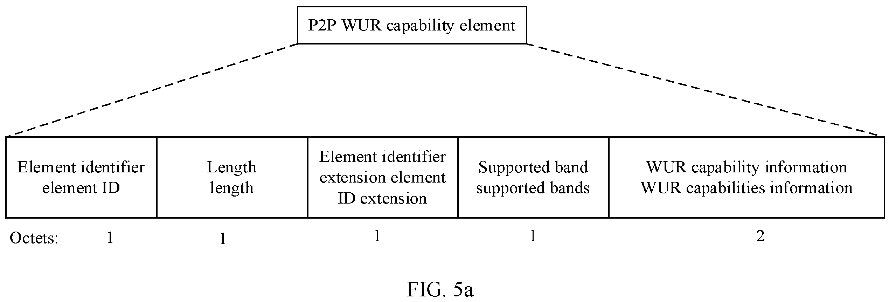

FIG. 5a is a diagram of a format of the P2P WUR capability element according to an embodiment of this application. As shown in FIG. 5a, the P2P WUR capability element may include at least one of the following fields: an element identifier (element ID), a length (length), element identifier extension (element ID extension), a supported band (supported bands), or WUR capability information (WUR capabilities information). The element ID field or the element ID extension field may indicate a type of an element. The length field may indicate a length of the element.

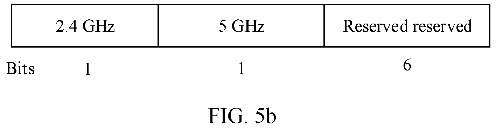

FIG. 5b is a diagram of a format of the "supported band" field according to an embodiment of this application. As shown in FIG. 5b, the "supported band" field may include at least one of the following fields: 2.4 GHz and 5 GHz. The 2.4 GHz field may indicate whether the AMP STA supports transmission on a 2.4 GHz band. The 5 GHz field may indicate whether the AMP STA supports transmission on a 5 GHz band. 2.4 GHz or 5 GHz described herein is merely an example. For example, the AMP STA may also support a sub-1 GHz band, a 6 GHz band, or the like. This is not limited in embodiments of this application.

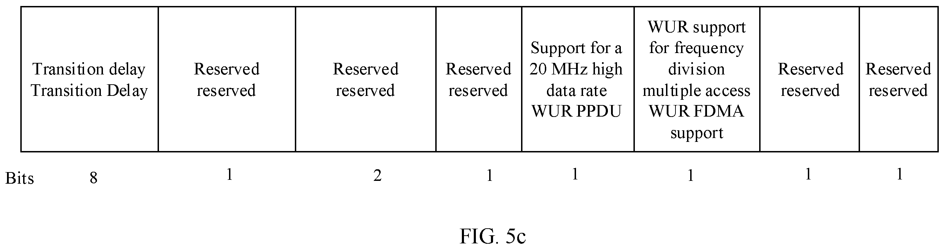

FIG. 5c is a diagram of a format of the WUR capability information field according to an embodiment of this application. As shown in FIG. 5c, the WUR capability information field may include at least one of the following fields: a transition delay (transition delay), support for a 20 MHz high data rate (high data rate, HDR) WUR PPDU (20 MHz WUR basic PPDU with HDR support), and WUR support for frequency division multiple access (frequency division multiple access, FDMA) (WUR FDMA support).

Transition delay field: If the field is generated by the AMP STA, it indicates maximum time required for a communication radio frequency subsystem or a WPT radio frequency subsystem of the AMP STA to switch from a doze state to an active state. In other words, the transition delay field may indicate duration of a time period in which the subsystem of the AMP STA changes from the doze state to the active state. For example, the field may occupy eight bits, and the eight bits may represent a time range from 256 microseconds to 65536 microseconds. If the field is generated by the energizing STA, the field may be a reserved field.

The "support for a 20 MHz high data rate WUR PPDU" field indicates whether a 20 MHz bandwidth high data rate WUR PPDU is supported. For example, the field may occupy one bit. If a value of the field is 1, it indicates that a 20 MHz bandwidth high data rate WUR PPDU is supported. If the value of the field is 0, it indicates that a 20 MHz bandwidth high data rate WUR PPDU is not supported.

The "WUR support for frequency division multiple access" field indicates whether frequency division multiple access is supported. For example, the field may occupy one bit. If a value of the field is 1, it indicates a frequency division multiple access operation. If the value of the field is 0, it indicates that the frequency division multiple access operation is not supported.

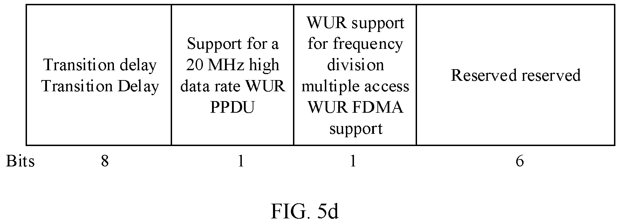

FIG. 5d is a variation of FIG. 5c. For descriptions of FIG. 5d, refer to FIG. 5c. Details are not described herein again. In other words, forms of the fields or elements shown in this application may have other variations, and are not shown one by one below.

The P2P WUR operation element in embodiments of this application is described below.

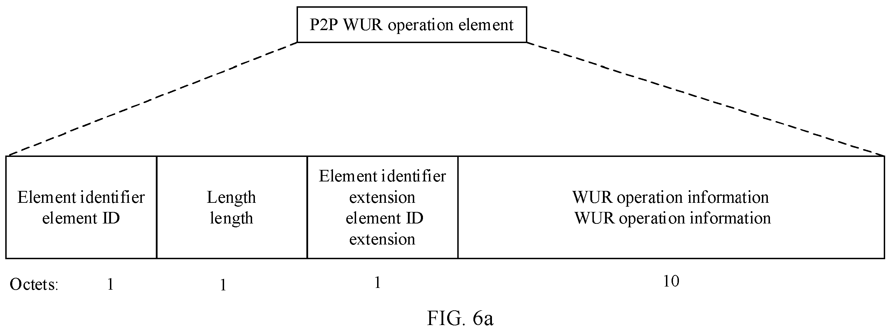

FIG. 6a is a diagram of a format of the P2P WUR operation element according to an embodiment of this application. As shown in FIG. 6a, the P2P WUR operation element may include at least one of the following fields: an element identifier (element ID), a length (length), element identifier extension (element ID extension), or WUR operation information (WUR operation information).

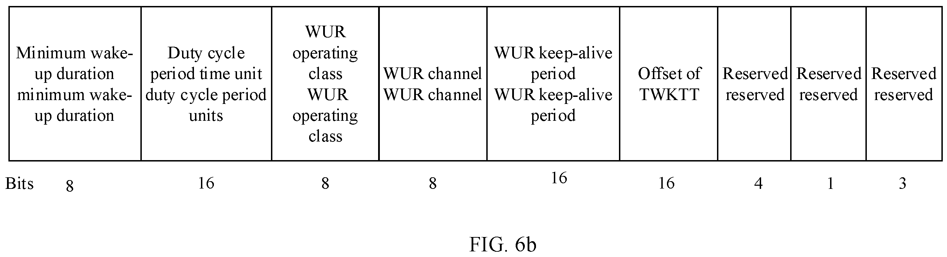

FIG. 6b is a diagram of a format of the WUR operation information field according to an embodiment of this application. As shown in FIG. 6b, the WUR operation information field may include at least one of the following fields: minimum wake-up duration (minimum wake-up duration), a time unit of a duty cycle period (duty cycle period units), a WUR operating class (WUR operating class), a WUR channel (WUR channel), a WUR keep-alive period (WUR keep-alive period), and an offset of target WUR link keep-alive frame transmission time (target WUR keep-alive frame transmission time, TWKTT) (Offset of TWKTT).

Before the foregoing fields are described, terms involved in the foregoing information are described first.

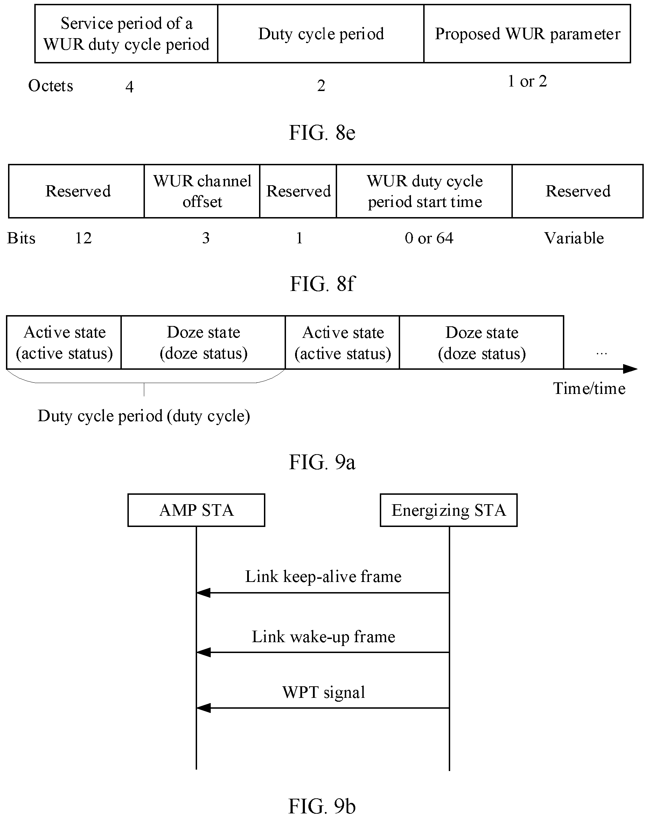

A duty cycle period indicates a doze period and a service period (which is alternatively referred to as an active period) of the AMP STA, or indicates time in which the AMP STA is in a doze state and an active state (referring to FIG. 9a), or indicates duration in which the AMP STA is in a doze state and duration in which the AMP STA is in an active state.

The WUR keep-alive period indicates a transmission period of a link keep-alive frame. The transmission period of the link keep-alive frame may also be represented as a time interval between two TWKTTs.

The TWKTT indicates transmission start time of the link keep-alive frame.

The fields shown in FIG. 6b are described below.

The "minimum wake-up duration" field is used to carry minimum active duration. The minimum wake-up duration indicates a minimum active period (which is alternatively referred to as a service period) that the energizing STA expects a WUR radio frequency subsystem of the AMP STA to maintain in each duty cycle period. For example, the "minimum wake-up duration" field may occupy eight bits in units of 256 microseconds. In this case, the eight bits may represent a time range from 0 microseconds to 65280 microseconds. Generally, the energizing STA needs to ensure that the AMP STA can receive the link keep-alive frame in time of the active period. Therefore, the energizing STA may determine, based on a length of the link keep-alive frame, a minimum service period of the WUR subsystem of the AMP STA in each duty cycle period. For example, the AMP STA may determine, based on time indicated by the "minimum wake-up duration" field, duration in which the AMP STA is in the active period. In other words, the time indicated by the "minimum wake-up duration" field may be used as a reference for the AMP STA to determine that the AMP STA is in the active period.

The "time unit of a duty cycle period" field (which is alternatively referred to as a "duty cycle period time unit" field) is used to carry a time unit of a duty cycle period. This field indicates a basic time unit (time unit, TU) used in the duty cycle period. For example, this field may occupy 16 bits in units of 4 microseconds. In this case, the 16 bits may represent a time range from 0 microseconds to 262140 microseconds. The time unit indicated by the "duty cycle period time unit" field may be applied to a time unit of a duty cycle period, an active period, or a transmission period of the link keep-alive frame that is negotiated by the AMP STA and the energizing STA.

The WUR operating class field is used to carry a WUR operating class. This field may indicate an operating class indicating a WUR primary channel of a link wake-up frame. For example, this field may occupy eight bits, and corresponds to different operating classes based on different areas.

The WUR channel field is used to carry a WUR channel. For example, this field may occupy eight bits, and indicates a channel number of the WUR primary channel. A specific meaning of the number may be determined with reference to a value of the WUR operating class field.

The WUR keep-alive period is used to carry the transmission period of the link keep-alive frame. This field may indicate the transmission period of the link keep-alive frame, and the transmission period may also be a time interval between two adjacent TWKTTs. For example, this field may occupy 16 bits in units of TUs indicated by the "duty cycle period time unit" field. In this case, the 16 bits may represent a time range from 0 TUs to 65535 TUs. Generally, the link keep-alive frame may be periodically transmitted. Therefore, the P2P WUR operation element may carry the transmission period of the link keep-alive frame and a TWKTT offset.

The "offset of TWKTT" field is used to carry an offset of transmission start time of the link keep-alive frame. This field indicates a time difference between start time of a 1^{st} TWKTT and start time of a system timing synchronization function (timing synchronization function, TSF) (for example, TSF=0). For example, this field may occupy 16 bits in units of TUs indicated by the "duty cycle period time unit" field. In this case, the 16 bits may represent a time range from 0 TUs to 65535 TUs.

The AMP STA and the energizing STA exchange the foregoing information in a process of setting up a P2P communication link, to learn capability information of each other, thereby improving efficiency of subsequent communication.

### Phase 2:

Phase 2 may also be referred to as an energy saving mode setup phase or a P2P WUR mode setup phase. The AMP STA and the energizing STA may exchange parameter information of a P2P WUR mode (P2P WUR mode) through negotiation, to set up a WUR link. The exchanged parameter information may include: duty cycle period information, WUR link information, start time of the P2P WUR mode, or the like. The parameter information may be included in a management frame, a control frame, or a data frame. The parameter information may be transmitted by using a P2P communication link that is set up in Phase 1, or may be transmitted by using a link on an AP side. This is not limited in this embodiment of this application.

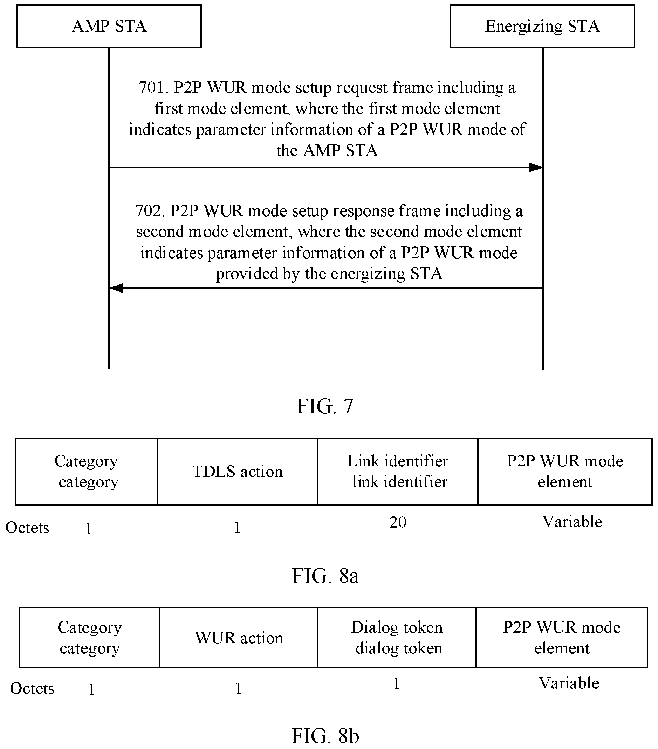

FIG. 7 is a diagram of a procedure of exchanging parameter information of a P2P WUR mode according to an embodiment of this application. As shown in FIG. 7, the method includes the following steps.

701. An AMP STA sends a P2P WUR mode setup request (P2P WUR mode setup request) frame to an energizing STA, where the P2P WUR mode setup request frame includes a first mode element, and the first mode element indicates parameter information of a P2P WUR mode of the AMP STA. Correspondingly, the energizing STA receives the P2P WUR mode setup request frame.

The first mode element may include at least one of the following fields: a service period of a duty cycle period, a duty cycle period of a P2P WUR mode, or a proposed WUR parameter. The first mode element may be referred to as a P2P WUR mode element (P2P WUR mode element).

702. The energizing STA sends a P2P WUR mode setup response (P2P WUR mode setup response) frame to the AMP STA, where the P2P WUR mode setup response frame may include a second mode element, and the second mode element indicates parameter information of a P2P WUR mode provided by the energizing STA. Correspondingly, the AMP STA receives the P2P WUR mode setup response frame.

As an example, the second mode element may include a WUR mode response status, and the WUR mode response status may indicate whether the energizing STA agrees to use parameter information indicated by the AMP STA to provide the P2P WUR mode. For example, the energizing STA may evaluate, based on a first parameter element received by the energizing STA, whether the energizing STA can support a P2P WUR service of the AMP STA. If the energizing STA can support the P2P WUR mode of the AMP STA, a second parameter element sent by the energizing STA may include an accept indication field. If the energizing STA does not support the P2P WUR mode of the AMP STA, the second parameter element sent by the energizing STA may include a denial indication field. For example, the second parameter element may further include parameter information of the P2P WUR service provided by the energizing STA. For another example, the second parameter element A may not include the denial indication field, but a parameter is directly carried in the second parameter element to implicitly indicate that the energizing STA refuses to use a parameter provided by the AMP STA. In other words, the second parameter element may include parameter information of the P2P WUR service provided by the energizing STA. For descriptions of the WUR mode response status, refer to the following descriptions.

As another example, the second mode element may include the WUR mode response status and the parameter information of the P2P WUR service provided by the energizing STA.

For example, the second mode element may include at least one of the following fields: a WUR mode response status, a WUR channel offset, or start time of a duty cycle period. The second mode element may be referred to as a P2P WUR mode element. For descriptions of the P2P WUR mode element, refer to the following descriptions. Details are not described herein.

The AMP STA and the energizing STA may set up a WUR link by exchanging respective parameter information.

The P2P WUR mode setup request frame and the P2P WUR mode setup response frame may be management frames, control frames, or data frames. For example, the foregoing frames may be transmitted through a P2P communication link that is set up in Phase 1, or may be forwarded by using an AP. For example, the AMP STA may send the P2P WUR mode setup request frame to the energizing STA by using the AP, or the energizing STA may send the P2P WUR mode setup response frame to the AMP STA by using the AP.

A frame format varies based on different protocols. An example is used in the following descriptions.

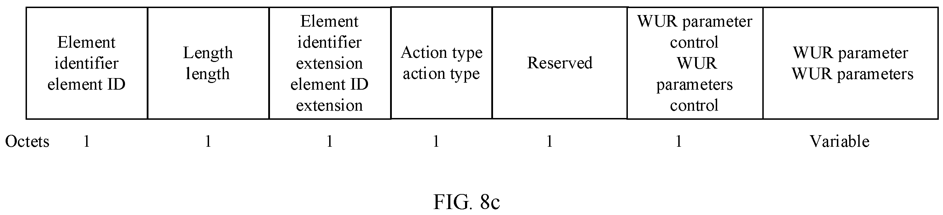

As an example, if a TDLS protocol is used for a P2P communication link, the foregoing two frames may be TDLS data frames. Frame body formats of the foregoing two frames may be shown in FIG. 8a. A category (category) field and a TDLS action (TDLS action) field may indicate a type of a frame. A link identifier (link identifier, link ID) field may indicate a specific TDLS link. The TDLS link may be used to transmit a P2P WUR mode element. For example, the link ID field may include a MAC address of the AMP STA or a MAC address of the energizing STA. The P2P WUR mode element may be used to carry an operation parameter of the P2P WUR mode. For the AMP STA, the P2P WUR mode element may be used to carry parameter information of the P2P WUR mode of the AMP STA. For the energizing STA, the P2P WUR mode element may be used to carry parameter information of the P2P WUR service provided by the energizing STA. For descriptions of the P2P WUR mode element, refer to FIG. 8c to FIG. 8f.

As another example, the foregoing two frames may be WUR action frames. Frame body formats of the foregoing two frames are shown in FIG. 8b. A category (category) field and a TDLS action (TDLS action) field may indicate a type of a frame. A dialog token (dialog token) field may be used to match the P2P WUR mode setup request frame with the P2P WUR mode setup response frame. The P2P WUR mode element may be used to carry an operation parameter of a WUR mode. For the AMP STA, the P2P WUR mode element may be used to carry parameter information of the P2P WUR mode of the AMP STA. For the energizing STA, the P2P WUR mode element may be used to carry parameter information of the P2P WUR service provided by the energizing STA. For descriptions of the P2P WUR mode element, refer to FIG. 8c to FIG. 8f.

Frame formats shown in FIG. 8a and FIG. 8b are merely examples. In specific implementation, the first parameter element and the second parameter element may alternatively be carried in other types of frames, and FIG. 8a and FIG. 8b cannot be understood as a limitation on embodiments of this application. When a frame that carries the first parameter element or a frame that carries the second parameter element is another type of frame, for parameter information carried in the frame, refer to a P2P WUR mode element or a WUR parameter field shown below.

The P2P WUR mode element in embodiments of this application is described below.

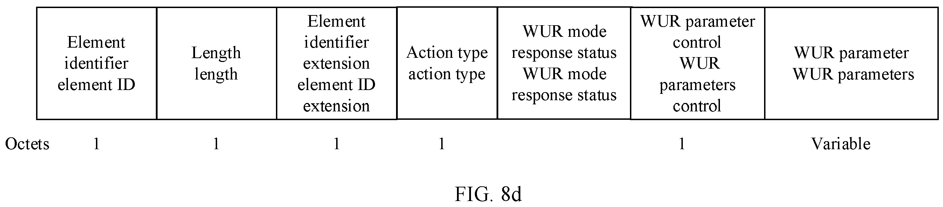

FIG. 8c and FIG. 8d are diagrams of formats of the P2P WUR mode element according to an embodiment of this application. As shown in FIG. 8c and FIG. 8d, the P2P WUR mode element may include at least one of the following fields: an element ID, a length, element ID extension, an action type (action type), a WUR mode response status (WUR mode response status), WUR parameter control (WUR parameters control), and a WUR parameter (WUR parameters). FIG. 8c shows a P2P WUR mode element generated by the AMP STA, and FIG. 8d shows a P2P WUR mode element generated by the energizing STA.

A. The action type field indicates an action type of a frame that carries the P2P WUR mode element. For example, the action type field may be represented by occupying one byte. For the P2P WUR mode, four different action types may be defined:
(1A) Enter P2P WUR mode request (enter P2P WUR mode request): This field is generated by the AMP STA, and indicates that the AMP STA requests to enter the P2P WUR mode. For example, a value of this action type field may be 5.
(2A) Enter P2P WUR mode response (enter P2P WUR mode response): This field is generated by the energizing STA, and indicates a response of the energizing STA to the request of the AMP STA to enter the P2P WUR mode. For example, a value of this action type field may be 6.
(3A) Enter P2P WUR mode suspend request (enter P2P WUR mode suspend request): This field is generated by the AMP STA, and indicates that the AMP STA requests to enter P2P WUR mode suspension. For example, a value of the action type field is 7.
(4A) Enter P2P WUR mode suspend response (enter P2P WUR mode suspend response): This field is generated by the energizing STA, and indicates a response of the energizing STA to the request of the AMP STA to enter P2P WUR mode suspension. For example, a value of this action type field may be 8.

The values of the foregoing action type fields are merely examples. In specific implementation, the values corresponding to the foregoing four action types may alternatively be other values, and examples are not described herein.

Based on the action type field, the AMP STA may enter the P2P WUR mode or suspend the P2P WUR mode. Entering the P2P WUR mode means that the AMP STA can switch between a doze state and an active state. For example, the AMP STA may continuously switch between the doze state and the active state by using a parameter that is exchanged by the AMP STA and the energizing STA through negotiation. Suspending the P2P WUR mode means that the AMP STA may temporarily ignore a parameter in the P2P WUR mode element, and enters the P2P WUR mode after restoration time. The restoration time may be set by the AMP STA, indicated by the energizing STA in the P2P WUR mode setup response frame, or indicated by the AMP STA in the P2P WUR mode setup response frame. A specific manner of setting the restoration time is not limited in embodiments of this application.

B. WUR mode response status field: If this field is generated by the energizing STA, it indicates a response of the energizing STA to the request of the AMP STA. For example, this field may occupy eight bits. For example, if a value of this field is 0, it indicates accept (accept); if the value of this field is 1, it indicates denial for unspecified reasons (denial for unspecified reasons); and if the value of this field is 2, it indicates denial that is caused due to a long duty cycle period proposed by the AMP STA (denial because preferred duty cycle too large). 3 to 255 are reserved values. If this field is generated by the AMP STA, this field is a reserved field (as shown in FIG. 8c).

C. WUR parameter control field: The WUR parameter control field indicates whether some fields in WUR parameter fields following the WUR parameter control field are valid. For example, this field may occupy eight bits. For example, B0 in the WUR parameter control field indicates whether a WUR duty cycle period start time (WUR duty cycle start time) field in the WUR parameter fields is valid, B1 in the WUR parameter control field indicates whether a WUR group identifier (WUR group ID list) field in the WUR parameter field is valid, and B2 in the WUR parameter control field indicates whether a proposed WUR parameter (proposed WUR parameters) field in the WUR parameter field is valid. B3 to B8 may be reserved bits.

D. WUR parameter field: The WUR parameter field includes a parameter related to a P2P WUR mode operation. A format of the WUR parameter field may be determined by the action type field and the WUR mode response status field. Alternatively, a format of the WUR parameter field may be determined by a type of a STA that generates the field. There are three cases:
(1D) If the WUR parameter field is generated by the AMP STA, and the action type field indicates a request for entering the P2P WUR mode or a request for entering P2P WUR mode suspension, the format of the WUR parameter field may be shown in FIG. 8e, and includes the following fields:
WUR duty cycle period service period (WUR duty cycle service period): This field indicates a service period of a P2P WUR mode of the AMP STA, that is, a time period in which a WUR radio frequency subsystem is in an active state in each duty cycle period. For example, this field may occupy four bytes. For example, if a time unit is 4 microseconds, it indicates a time range from 0 microseconds to 17179869180 microseconds (approximately 4.8 h).

Duty cycle period (duty cycle period) field: This field indicates a duty cycle period of the P2P WUR mode of the AMP STA. For example, this field may occupy two bytes. If a time unit is a TU, it indicates a time range from 0 microseconds to 17179344900 microseconds (approximately 4.8 h).

Proposed WUR parameter (proposed WUR parameters) field: This field indicates a P2P WUR mode parameter proposed by the AMP STA for the energizing STA, and includes, for example, a proposed WUR PPDU data rate or a link keep-alive frame requirement. For example, the proposed WUR parameter field may occupy eight bits. A link keep-alive frame requirement field may indicate whether a link keep-alive frame is required.

(2D) If the WUR parameter field is generated by the energizing STA, the action type field indicates a response of entering the P2P WUR mode or a response of entering P2P WUR mode suspension, and the WUR mode response status field indicates accept, the format of the WUR parameter field may be shown in FIG. 8f, and includes the following fields:

WUR channel offset (WUR channel offset) field: This field indicates an offset of a WUR channel relative to a WUR primary channel. For example, this field may occupy eight bits. For example, if a value of this field is 0, it indicates that there is no offset; if the value of this field is 1, 3, or 5, it indicates that the WUR channel is a 1^{st}, 2^{nd}, or 3^{rd} 20 MHz channel above the WUR primary channel; or if the value of this field is 2, 4, or 6, it indicates that the WUR channel is a 1^{st}, 2^{nd}, or 3^{rd} 20 MHz channel below the WUR primary channel. 7 is a reserved value.

WUR duty cycle period start time (WUR duty cycle start time) field: This field indicates a start time point at which the energizing STA plans to start to provide a P2P WUR mode support service for the AMP STA. For example, a value of this field is a TSF value of WUR duty cycle period start time, and may be represented by using 64 bits.

(3D) In other cases, the WUR parameter field is a reserved field.

The foregoing other cases may include but are not limited to a case in which the WUR mode response status field indicates denial. Examples are not enumerated one by one herein.

Based on the foregoing duty cycle period, the AMP STA may operate based on the duty cycle period in the P2P WUR mode. As shown in FIG. 9a, in a duty cycle period, the AMP STA may be in an active state (active status) in a part of time, and in a doze state (doze status) in another part of time. The WUR duty cycle period start time field may indicate time (or a moment or a time period) at which the energizing STA starts to provide a P2P WUR service for the AMP STA. Start time of the WUR duty cycle period may be a start time point of a 1^{st} duty cycle period. Generally, the AMP STA may enter a WUR mode in any duty cycle period after the start time indicated by the WUR duty cycle period start time field.

In embodiments of this application, the AMP STA and the energizing STA exchange parameter information, so that the energizing STA and the AMP STA negotiate with each other to confirm operation information of the P2P WUR mode, thereby improving communication efficiency.

A P2P communication link may be set up between the AMP STA and the energizing STA through Phase 1, and a WUR link may be set up through Phase 2. One AMP STA may set up the P2P WUR mode with one or more energizing STAs. Although the AMP STA may set up the P2P WUR mode with a plurality of energizing STAs, the AMP STA may enter a P2P WUR mode negotiated between the AMP STA and one energizing STA.

### Phase 3:

Phase 3 may also be referred to as an energy saving mode operating phase, a P2P WUR mode operating mode, or a P2P WUR mode operation (P2P WUR mode operation) phase. In this phase, the AMP STA may enter a P2P WUR mode. For example, the AMP STA may continuously switch between an active state and a doze state. For another example, the AMP STA may receive a WPT signal of the energizing STA to perform wireless power transfer. Details are as follows:
(1) Enter a P2P WUR mode (enter P2P WUR mode): The AMP STA may choose, based on parameters (such as the WUR duty cycle period start time field and the duty cycle period field) negotiated in Phase 2, to enter the P2P WUR mode at a specific time point. For example, after the AMP STA enters the P2P WUR mode, a communication radio frequency subsystem and a WPT radio frequency subsystem of the AMP STA may be in a doze state. A WUR radio frequency (WUR radio) subsystem corresponding to a WUR link may continuously switch between an active state and a doze state based on a specific duty cycle period.
(2) P2P WUR keep-alive (P2P WUR keep-alive): As shown in FIG. 9b, when the WUR radio frequency subsystem is in an active state, the energizing STA may send a link keep-alive frame to the AMP STA in an active state of the AMP STA. For example, the energizing STA may send the link keep-alive frame to the AMP STA based on the WUR duty cycle period start time field and the duty cycle period field when the WUR radio frequency subsystem of the AMP STA is in an active state. Therefore, the WUR radio frequency subsystem of the AMP STA may determine, after receiving the link keep-alive frame, that the WUR link is still valid. Alternatively, the energizing STA may indicate, to another energizing STA or another AMP STA by using the link keep-alive frame, that the WUR link is occupied. If a WUR radio frequency of the AMP STA does not receive the link keep-alive frame within a period of time, the AMP STA may actively wake up and determine whether the AMP STA is still in a service range of the energizing STA. When the AMP STA is not in the service range of the energizing STA, the AMP STA may delete information exchanged in Phase 2, or delete information exchanged in Phase 1, or the like.

In embodiments of this application, the link keep-alive frame may also be referred to as a P2P WUR keep-alive frame (P2P WUR keep-alive frame), or the like. A name of this frame is not limited.

(3) P2P WRU wake-up (P2P WUR wake-up): If the energizing STA expects to perform wireless power transfer, the energizing STA may send a link wake-up frame to the AMP STA on a WUR link. After the WUR radio frequency subsystem of the AMP STA receives the link wake-up frame, the WUR radio frequency subsystem may wake up the WPT radio frequency subsystem and/or the communication radio frequency subsystem, or may wake up a WPT link and/or a communication link. After waking up the WPT radio frequency subsystem and/or the communication radio frequency subsystem, the AMP STA and the energizing STA may perform wireless power transfer by using the WPT link. For example, the energizing STA may send a WPT signal to the AMP STA, and the AMP STA receives the WPT signal, and then converts the WPT signal into direct current energy. After wireless power transfer ends, the WPT radio frequency subsystem and/or the communication radio frequency subsystem of the AMP STA may switch to a doze state, and the WUR radio frequency subsystem may continue to continuously switch between an active state and a doze state based on the WUR duty cycle period start time field and the duty cycle period field.

In embodiments of this application, the link wake-up frame may also be referred to as a P2P WUR wake-up frame (P2P WUR wake-up frame) or the like. A name of this frame is not limited.

A sequence of the link keep-alive frame, the link wake-up frame, and the WPT signal shown in FIG. 9b is merely an example. For example, when the WUR radio frequency subsystem of the AMP STA is in an active state, the energizing STA sends the link keep-alive frame to the AMP STA, so that the AMP STA determines, based on the link keep-alive frame, that the WUR link is still valid, and the energizing STA may also send the link wake-up frame to the AMP STA, so that the AMP STA can wake up the WPT radio frequency subsystem link and the communication radio frequency subsystem based on the link wake-up frame. When the WPT radio frequency subsystem (which may alternatively include a communication radio frequency subsystem) is in an active state, the energizing STA sends a WPT signal to the AMP STA, so that the AMP STA can perform radio frequency collection.

The link keep-alive frame and the link wake-up frame in embodiments of this application are described below.

The link wake-up frame may include an identifier of target P2P WUR. Optionally, the link wake-up frame may further include an identifier of source P2P WUR. The identifier of the source P2P WUR is an identifier (which may alternatively be referred to as an identifier of a transmit end) of an apparatus that sends the link wake-up frame, that is, an identifier of the energizing STA. The identifier of the target P2P WUR is an identifier (which may alternatively be referred to as an identifier of a receive end) of an apparatus that receives the link wake-up frame, that is, an identifier of the AMP STA.

The identifier of the energizing STA may be determined based on a medium access control (medium access control, MAC) address of the energizing STA and cyclic redundancy check CRC. For example, after 32-bit CRC calculation is performed on a 48-bit MAC address of the energizing STA, 12 least significant bits (least significant bit, LSB) are used as the identifier of the energizing STA. The identifier of the AMP STA is determined based on a MAC address of the AMP STA and cyclic redundancy check CRC. For example, after 32-bit CRC calculation is performed on a 48-bit MAC address of the AMP STA, 12 LSBs are used as the identifier of the AMP STA. Certainly, the foregoing identifiers are merely examples. In specific implementation, the identifier of the energizing STA and the identifier of the AMP STA may be alternatively calculated in another manner. Examples are not enumerated one by one herein.

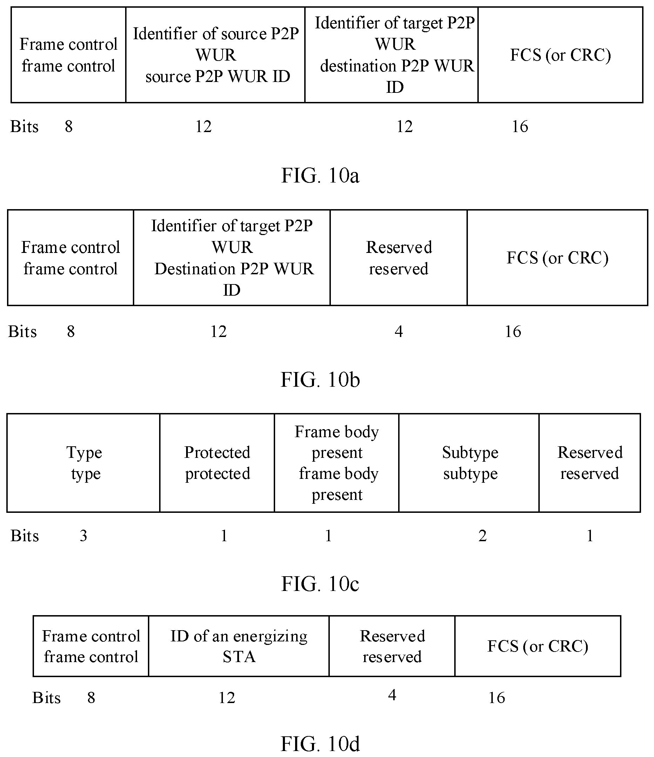

As an example, FIG. 10a is a diagram of a format of the link wake-up frame according to an embodiment of this application. The link wake-up frame may include an identifier of source P2P WUR and an identifier of target P2P WUR. Because the link wake-up frame includes an identifier of a transmit end and an identifier of a receive end, a probability of false wake-up can be effectively reduced.

As shown in FIG. 10a, the link wake-up frame may include at least one of the following: frame control (frame control), an identifier of source P2P WUR (source P2P WUR ID), an identifier of target P2P WUR (destination P2P WUR ID), or a frame check sequence (frame check sequence, FCS) (or cyclic redundancy check (cyclic redundancy check, CRC)). The source P2P WUR ID field may indicate a P2P WUR ID of the energizing STA. For example, a value carried in the source P2P WUR ID field may be a P2P WUR ID of 12 LSBs obtained after 32-bit CRC calculation is performed on a 48-bit MAC address of the energizing STA. The target P2P WUR ID field indicates a P2P WUR ID of the AMP STA. For example, a value carried in the target P2P WUR ID field may be a P2P WUR ID of 12 LSBs obtained after 32-bit CRC calculation is performed on a 48-bit MAC address of the AMP STA. The FCS field may occupy 16 bits or the like. This is not limited in embodiments of this application. For descriptions of a frame control field, refer to FIG. 10c.

As another example, FIG. 10b is a diagram of a format of the link wake-up frame according to an embodiment of this application. The link wake-up frame may include an identifier of target P2P WUR, that is, an identifier of the AMP STA. A frame length of the link wake-up frame is shorter, so that signaling overheads can be reduced. For descriptions of fields in FIG. 10b, refer to FIG. 10a. Details are not described herein again. For descriptions of a frame control field, refer to FIG. 10c.

FIG. 10c is a diagram of a format of the frame control field according to an embodiment of this application. As shown in FIG. 10c, the frame control field may include at least one of the following: type (type), protected (protected), frame body present (frame body present), and subtype (subtype). For example, the type field may indicate a type of the link wake-up frame. For example, this field may occupy eight bits. For example, 0 to 4 represent existing WUR frames, 5 represents a P2P WUR frame (or represents a frame involved in the P2P WUR mode), and 6 and 7 are reserved values. The subtype field indicates a specific type of a P2P WUR frame. For example, the subtype field may occupy two bits. If a value of this field is 0, it indicates a P2P WUR wake-up frame (that is, the link wake-up frame shown in this application). If the value of this field is 1, it indicates a P2P WUR keep-alive frame (that is, the link keep-alive frame shown in this application). 2 and 3 are reserved values. The protected field may indicate whether this frame is protected, and this field may be a reserved field. The frame body present frame may indicate whether a frame body is present, and this field may be a reserved field.

FIG. 10d is a diagram of a format of the link keep-alive frame according to an embodiment of this application. As shown in FIG. 10d, the link keep-alive frame may include at least one of the following: frame control, an identifier of source P2P WUR (for example, an ID of the energizing STA), or an FCS (or CRC). The link keep-alive frame may indicate, by including the identifier of the energizing STA, an apparatus that receives the link keep-alive frame, and learn a STA that sends the link keep-alive frame. For example, an AMP STA may learn, by using the identifier of the energizing STA in the link keep-alive frame, that the AMP STA is still in a service range of the energizing STA, and a WUR link between the AMP STA and the energizing STA is still valid. For descriptions of a frame control field shown in FIG. 10d, refer to FIG. 10c. Details are not described herein again.

In embodiments of this application, the energizing STA can ensure running of the AMP STA in the P2P WUR mode by using the link keep-alive frame or the link wake-up frame.

### Phase 4:

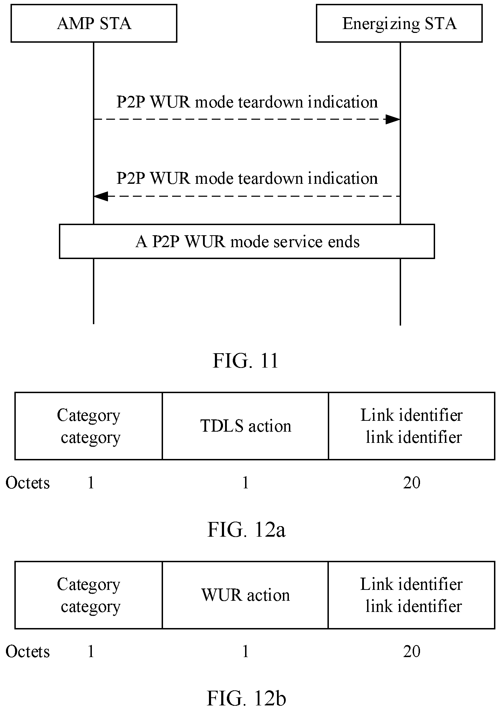

Phase 4 may also be referred to as an energy saving mode teardown phase or a P2P WUR mode teardown (P2P WUR mode teardown) phase. As shown in FIG. 11, both the AMP STA and the energizing STA may actively initiate a teardown process. The AMP STA may send a P2P WUR mode teardown indication to the energizing STA. Alternatively, the energizing STA may send a P2P WUR mode teardown indication to the AMP STA. The P2P WUR mode teardown indication may indicate to tear down a P2P WUR energy saving service between the AMP STA and the energizing STA, or indicate to tear down a P2P WUR mode provided by the energizing STA, or indicate to tear down a P2P WUR service between the AMP STA and the energizing STA.

The P2P WUR mode teardown indication may be included in a management frame, a control frame, or a data frame. The P2P WUR mode teardown indication may be transmitted through a P2P communication link, or may be forwarded by using an AP. Frame formats of the foregoing frames may vary based on different protocols.

As an example, if a TDLS protocol is used for a P2P communication link, the foregoing frames may be TDLS data frames. Frame body formats of the foregoing frames may be shown in FIG. 12a. A category field and a TDLS action field indicate a type of a frame, and a link identifier (link identifier, link ID) field may indicate a specific TDLS link. For example, the TDLS link may be used to transmit a TDLS data frame. For example, the TDLS action field may indicate that a type of a frame is a teardown frame. Therefore, an apparatus that receives the frame may learn that the apparatus needs to tear down P2P WUR.

As another example, a WUR action frame may be transmitted on a P2P communication link. A frame body structure of the WUR action frame is shown in FIG. 12b. A category (category) field and a WUR action (WUR action) field may indicate a type of the frame. The link ID field may indicate a specific link. For example, the link may be used to transmit a WUR action frame. For example, the WUR action field may indicate that the type of the frame is a teardown frame.

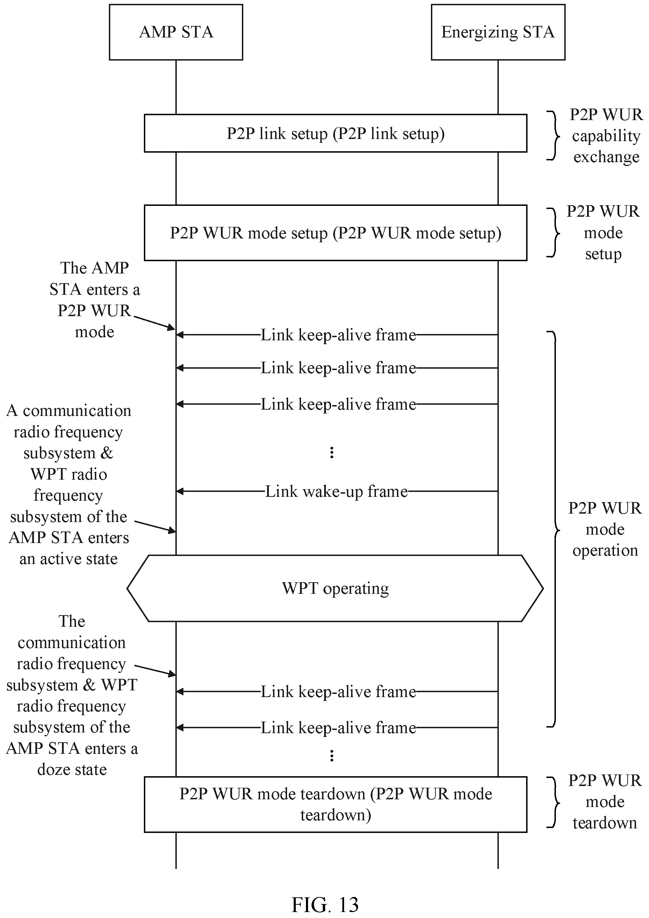

FIG. 13 is a schematic flowchart of a communication method according to an embodiment of this application. For a P2P link setup process in FIG. 13, refer to the foregoing descriptions in Phase 1, FIG. 4, or FIG. 5a to FIG. 6b. For a P2P WUR mode setup process in FIG. 13, refer to the foregoing descriptions in Phase 2, FIG. 7, or FIG. 8a to FIG. 8f. For descriptions of the link keep-alive frame, the link wake-up frame, and a WPT operation (for example, a process in which the energizing STA sends the WPT signal to the AMP STA, and the AMP STA receives the WPT signal) in FIG. 13, refer to descriptions in FIG. 9a to FIG. 10d. For a P2P WUR mode teardown process in FIG. 13, refer to descriptions in FIG. 11, FIG. 12a, or FIG. 12b. Details are not described herein again.

A STA provided in embodiments of this application is described below.

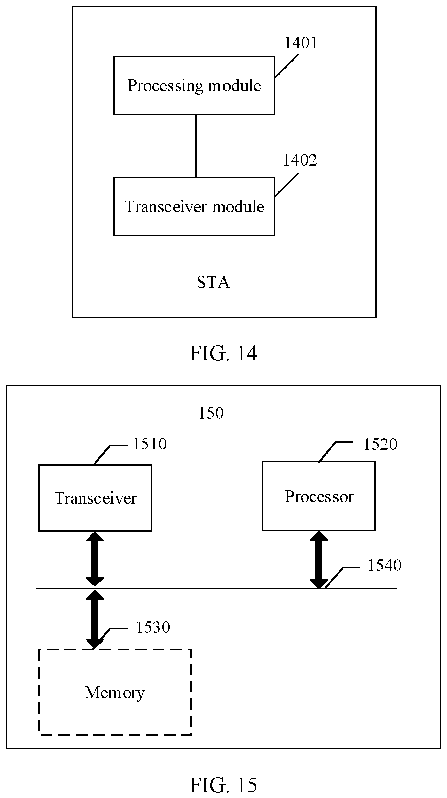

In this application, the STA is divided into functional modules according to the foregoing method embodiments. For example, functional modules corresponding to functions may be obtained through division, or two or more functions may be integrated into one processing module. The integrated module may be implemented in a form of hardware, or may be implemented in a form of a software functional module. It should be noted that, in this application, module division is an example, and is merely a logical function division. In actual implementation, another division manner may be used. The STA in embodiments of this application is described in detail below with reference to FIG. 14 to FIG. 16.

FIG. 14 is a diagram of a structure of a STA according to an embodiment of this application. As shown in FIG. 14, the STA includes a processing module 1401 and a transceiver module 1402. The transceiver module 1402 may implement a corresponding communication function, and the processing module 1401 is configured to implement a corresponding processing function. For example, the transceiver module 1402 may also be referred to as an interface, a communication interface, a communication module, or the like.

In some embodiments of this application, the STA may be configured to perform an action performed by the AMP STA in the foregoing method embodiments. In this case, the AMP STA may be a WLAN device, or a chip, a functional module, or the like that may be configured in the device. The transceiver module 1402 is configured to perform a receiving/sending related operation of the AMP STA in the foregoing method embodiments, and the processing module 1401 is configured to perform a processing related operation of the AMP STA in the foregoing method embodiments.

For example, the processing module 1401 may be configured to generate a P2P WUR capability element, and the transceiver module 1402 may be configured to send or output the P2P WUR capability element. The P2P WUR capability element may be included in a setup request frame. For example, the transceiver module 1402 may be further configured to: receive or input a P2P WUR capability element from an energizing STA, and parse the P2P WUR capability element. The P2P WUR capability element from the energizing STA may be included in a setup response frame. For example, the setup response frame may further include a P2P WUR operation element.

For example, the processing module 1401 may be further configured to generate a P2P WUR mode element, and the transceiver module 1402 is configured to send or output the P2P WUR mode element. The P2P WUR mode element may be included in a P2P WUR mode setup response frame. The transceiver module 1402 may be further configured to receive or input the P2P WUR mode setup response frame. The P2P WUR mode setup response frame may include a P2P WUR mode element of the energizing STA.

The transceiver module 1402 may be further configured to receive or input a link keep-alive frame, and the processing module 1401 may be configured to determine, based on the link keep-alive frame, that a WUR link is valid.

The transceiver module 1402 may be further configured to receive or input a link wake-up frame.

The transceiver module 1402 may be further configured to receive or input a WPT signal.

The transceiver module 1402 may be further configured to: send or output a P2P WUR mode teardown indication, or receive or input a P2P WUR mode teardown indication. For example, the processing module 1401 may include a generation module, a parsing module, or the like. For example, the generation module may be configured to generate each piece of information shown above, and the parsing module may be configured to parse each piece of information received by the AMP STA. For example, the transceiver module 1402 may include a radio frequency module, an antenna module, and the like. For example, the transceiver module 1402 may include a pin module and the like.

Still refer to FIG. 14. In some other embodiments of this application, the STA may be configured to perform an action performed by the energizing STA in the foregoing method embodiments. In this case, the STA may be a WLAN device, or a chip, a functional module, or the like that may be configured in the device. The transceiver module 1402 is configured to perform a receiving/sending related operation of the energizing STA in the foregoing method embodiments, and the processing module 1401 is configured to perform a processing related operation of the energizing STA in the foregoing method embodiment.

For example, the transceiver module 1402 may be configured to: receive or input a P2P WUR capability element from an AMP STA, where the P2P WUR capability element may be included in a setup request frame; and send or output a P2P WUR capability element of the energizing STA, where the P2P WUR capability element may be included in a setup response frame.

The transceiver module 1402 may be configured to: receive or input a P2P WUR mode setup request frame, and send or output a P2P WUR mode setup response frame.

The processing module 1401 may be configured to: generate information sent or output by the transceiver module 1402, and parse information received or input by the transceiver module 1402.

The transceiver module 1402 may be configured to send or output a link keep-alive frame.

The transceiver module 1402 may be configured to send or output a link wake-up frame.

For example, the transceiver module 1402 may be configured to send or output a WPT signal.

The transceiver module 1402 may be further configured to: receive or input a P2P WUR mode teardown indication, or send or output the P2P WUR mode teardown indication.

For example, the processing module 1401 may include a generation module and a parsing module. For example, the generation module may be configured to generate each piece of information shown above, and the parsing module may be configured to parse each piece of information received by the energizing STA. For example, the transceiver module 1402 may include a radio frequency module, an antenna module, and the like. For example, the transceiver module 1402 may include a pin module and the like.

Optionally, in the foregoing embodiments, the STA may further include a storage module. The storage module may be configured to store instructions and/or data, and the processing module 1401 may read the instructions and/or the data in the storage module, to enable the STA to implement the foregoing method embodiments.

In the foregoing embodiments, for specific descriptions of terms or steps such as the P2P WUR capability element, the P2P WUR operation element, the P2P WUR mode element, the link wake-up frame, the link keep-alive frame, and the P2P WUR mode teardown indication, refer to the descriptions in the foregoing method embodiments. Details are not described herein again.

Specific descriptions of the transceiver module and the processing module shown in the foregoing embodiments are merely examples. For specific functions or steps performed by the transceiver module and the processing module, refer to the foregoing method embodiments. Details are not described herein again.

The STA in embodiments of this application is described above. A possible product form of the STA is described below. Any form of product that has a function of the STA in FIG. 14 falls within the protection scope of embodiments of this application. The following description is merely an example, and does not limit the product form of the STA in embodiments of this application.

In a possible implementation, in the STA shown in FIG. 14, the processing module 1401 may be one or more processors, and the transceiver module 1402 may be a transceiver; or the transceiver module 1402 may be a sending module and a receiving module. The sending module may be a transmitter, and the receiving module may be a receiver. The sending module and the receiving module are integrated into one component, for example, a transceiver. In embodiments of this application, the processor and the transceiver may be coupled, or the like. A manner of connection between the processor and the transceiver is not limited in embodiments of this application. In a process of performing the foregoing method, a process of sending information in the foregoing method may be a process of outputting the information by the processor. When outputting the information, the processor outputs the information to a transceiver, so that the transceiver transmits the information. After the information is outputted by the processor, other processing may further need to be performed on the information before the information arrives at the transceiver. Similarly, a process of receiving information in the foregoing method may be a process of receiving the input information by the processor. When the processor receives the input information, the transceiver receives the information and inputs the information to the processor. Further, after the transceiver receives the information, other processing may need to be performed on the information before the information is input into the processor.

As shown in FIG. 15, a STA 150 includes one or more processors 1520 and a transceiver 1510.

In some embodiments of this application, the STA may be configured to perform a step, a method, or a function performed by the AMP STA. For example, the processor 1520 may be configured to perform a function or a step implemented by the processing module 1401 shown in FIG. 14, and the transceiver 1510 may be configured to perform a function or a step implemented by the transceiver module 1402 shown in FIG. 14. For specific descriptions of the processor 1520 and the transceiver 1510, refer to FIG. 14 or the method embodiments shown above. Details are not described herein again.

In some other embodiments of this application, the STA is configured to perform a step, a method, or a function performed by the energizing STA. For example, the processor 1520 may be configured to perform a function or a step implemented by the processing module 1401 shown in FIG. 14, and the transceiver 1510 may be configured to perform a function or a step implemented by the transceiver module 1402 shown in FIG. 14. For specific descriptions of the processor 1520 and the transceiver 1510, refer to FIG. 14 or the method embodiments shown above. Details are not described herein again.

In implementations of the STA shown in FIG. 15, the transceiver may include a receiver and a transmitter. The receiver is configured to perform a receiving function (or operation), and the transmitter is configured to perform a transmitting function (or operation). In addition, the transceiver is configured to communicate with another device/apparatus through a transmission medium.

Optionally, the STA 150 may further include one or more memories 1530, configured to store program instructions and/or data. The memory 1530 is coupled to the processor 1520. The coupling in this embodiment of this application may be an indirect coupling or a communication connection between STAs, units, or modules in an electrical form, a mechanical form, or another form, and is used for information exchange between the STAs, the units, or the modules. The processor 1520 may cooperate with the memory 1530. The processor 1520 may execute program instructions stored in the memory 1530. Optionally, at least one of the one or more memories may be included in the processor.

A specific connection medium among the transceiver 1510, the processor 1520, and the memory 1530 is not limited in this embodiment of this application. In this embodiment of this application, the memory 1530, the processor 1520, and the transceiver 1510 are connected by using a bus 1540 in FIG. 15. The bus is denoted by using a bold line in FIG. 15. A manner of connection between other components is merely an example for description, and cannot be construed as a limitation. The bus may be classified into an address bus, a data bus, a control bus, and the like. For ease of representation, only one thick line is used to represent the bus in FIG. 15, but this does not mean that there is only one bus or only one type of bus.

In this embodiment of this application, the processor may be a general-purpose processor, a digital signal processor, an application-specific integrated circuit, a field programmable gate array or another programmable logic device, a discrete gate or transistor logic device, a discrete hardware component, or the like. The processor can implement or execute the methods, the steps, and the logical block diagrams disclosed in embodiments of this application. The general-purpose processor may be a microprocessor, any conventional processor, or the like. The steps of the methods disclosed in combination with embodiments of this application may be directly implemented by a hardware processor, or may be implemented by using a combination of hardware and software modules in the processor, or the like.

In this embodiment of this application, the memory may include but is not limited to a nonvolatile memory such as a hard disk drive (hard disk drive, HDD) or a solid-state drive (solid-state drive, SSD), a random access memory (Random Access Memory, RAM), an erasable programmable read-only memory (Erasable Programmable ROM, EPROM), a read-only memory (Read-Only Memory, ROM), or a portable read-only memory (Compact Disc Read-Only Memory, CD-ROM). The memory is any storage medium that can be used to carry or store program code in a form of an instruction or a data structure and that can be read and/or written by a computer (for example, the STA shown in this application). However, this is not limited. The memory in embodiments of this application may alternatively be a circuit or any other apparatus that can implement a storage function, and is configured to store the program instructions and/or the data.

The processor 1520 is mainly configured to: process a communication protocol and communication data, control the entire STA, execute a software program, and process data of the software program. The memory 1530 is mainly configured to store the software program and data. The transceiver 1510 may include a control circuit and an antenna. The control circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, such as a touchscreen, a display, or a keyboard, is mainly configured to receive data input by a user and output data to the user.

After the STA is powered on, the processor 1520 may read the software program in the memory 1530, interpret and execute instructions of the software program, and process data of the software program. When data needs to be sent in a wireless manner, the processor 1520 performs baseband processing on the to-be-sent data, and then outputs a baseband signal to a radio frequency circuit. The radio frequency circuit performs radio frequency processing on the baseband signal, and then sends a radio frequency signal in a form of electromagnetic wave through the antenna. When data is sent to the STA, the radio frequency circuit receives a radio frequency signal through the antenna, converts the radio frequency signal into a baseband signal, and outputs the baseband signal to the processor 1520. The processor 1520 converts the baseband signal into data, and processes the data.

The STA shown in this embodiment of this application may alternatively have more components and the like than those in FIG. 15. This is not limited in this embodiment of this application. The methods performed by the processor and the transceiver are merely examples. For specific steps performed by the processor and the transceiver, refer to the methods described above.

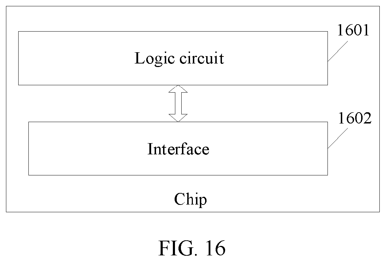

In another possible implementation, in the STA shown in FIG. 14, the processing module 1401 may be one or more logic circuits, and the transceiver module 1402 may be an input/output interface which may also be referred to as a communication interface, an interface circuit, an interface, or the like. Alternatively, the transceiver module 1402 may be a sending module and a receiving module. The sending module may be an output interface, and the receiving module may be an input interface. The sending module and the receiving module are integrated into one module, for example, an input/output interface. As shown in FIG. 16, a STA shown in FIG. 16 includes a logic circuit 1601 and an interface 1602. In other words, the processing module 1401 may be implemented by using the logic circuit 1601, and the transceiver module 1402 may be implemented by using the interface 1602. The logic circuit 1601 may be a chip, a processing circuit, an integrated circuit, a system on chip (system on chip, SoC) chip, or the like. The interface 1602 may be a communication interface, an input/output interface, a pin, or the like. For example, FIG. 16 shows an example in which the STA is a chip. The chip includes the logic circuit 1601 and the interface 1602.

In this embodiment of this application, the logic circuit and the interface may be coupled to each other. A specific manner of connection between the logical circuit and the interface is not limited in this embodiment of this application. For example, the logic circuit 1601 may be configured to perform a function or a step implemented by the processing module 1401 shown in FIG. 14, and the interface 1602 may be configured to perform a function or a step implemented by the transceiver module 1402 shown in FIG. 14. For specific descriptions of the logic circuit 1601 and the interface 1602, refer to FIG. 14 or the method embodiments shown above. Details are not described herein again.

The STA shown in this embodiment of this application may implement the methods provided in embodiments of this application in a form of hardware, or may implement the methods provided in embodiments of this application in a form of software. This is not limited in embodiments of this application.

An embodiment of this application further provides a communication system. The communication system includes an AMP STA and an energizing STA. The AMP STA and the energizing STA may be configured to perform the method in any one of the foregoing embodiments.

In addition, this application further provides a computer program. The computer program is used to implement operations and/or processing performed by STAs in the methods provided in this application.

This application further provides a computer-readable storage medium. The computer-readable storage medium stores computer code. When the computer code is run on a computer, the computer is enabled to perform operations and/or processing performed by STAs in the methods provided in this application.

This application further provides a computer program product. The computer program product includes computer code or a computer program. When the computer code or the computer program is run on a computer, operations and/or processing performed in the methods provided in this application are/is performed.

In the several embodiments provided in this application, it should be understood that the disclosed system, STA, and method may be implemented in other manners. For example, the described STA embodiments are merely examples. For example, division into modules is merely logical functional division. In actual implementation, another division manner may be used. For example, a plurality of modules or components may be combined or integrated into another system, or some features may be ignored or not performed. In addition, the displayed or discussed mutual couplings or direct couplings or communication connections may be implemented through some interfaces. The indirect couplings or communication connections between the communication apparatuses or modules may be implemented in electronic, mechanical, or other forms.

The modules described as separate parts may or may not be physically separate, and parts displayed as modules may or may not be physical modules, may be located in one position, or may be distributed on a plurality of network modules. Some or all of the modules may be selected based on an actual requirement to achieve the technical effects of the solutions provided in embodiments of this application.

In addition, functional modules in embodiments of this application may be integrated into one processing module, or each of the modules may exist alone physically, or two or more modules may be integrated into one module. The integrated module may be implemented in a form of hardware, or may be implemented in a form of a software functional module.

When the integrated module is implemented in the form of a software functional module and sold or used as an independent product, the integrated unit may be stored in a computer-readable storage medium. Based on such an understanding, the technical solutions of this application essentially, the part contributing to the conventional technologies, or all or some of the technical solutions may be implemented in a form of a software product. The computer software product is stored in a readable storage medium, and includes a plurality of instructions for indicating a computer device (which may be a personal computer, a server, a network device, or the like) to perform all or some of the steps of the methods described in embodiments of this application. The foregoing readable storage medium includes: any medium that can store program code, such as a USB flash drive, a removable hard disk, a read-only memory (Read-Only Memory, ROM), a random access memory (Random Access Memory, RAM), a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, wherein the method comprises:
sending, by an ambient power AMP station STA, a setup request frame to an energizing STA by using an access point AP, wherein the setup request frame comprises a first capability element, and the first capability element indicates capability information of the AMP STA;
receiving, by the AMP STA, a setup response frame from the energizing STA by using the AP, wherein the setup response frame comprises a second capability element, and the second capability element indicates capability information of the energizing STA;
sending, by the AMP STA, a P2P WUR mode setup request frame to the energizing STA, wherein the P2P WUR mode setup request frame comprises a first mode element, and the first mode element indicates parameter information of a P2P WUR mode of the AMP STA; and
receiving, by the AMP STA, a P2P WUR mode setup response frame from the energizing STA, wherein the P2P WUR mode setup response frame comprises a second mode element, and the second mode element indicates parameter information of a P2P WUR service provided by the energizing STA.

2. The method according to claim 1, wherein the setup response frame further comprises an operation element, and the operation element indicates operation information for transmitting a link keep-alive frame by the energizing STA.

3. The method according to claim 1 or 2, wherein the setup request frame is a tunneled direct link setup TDLS setup request frame, and the setup response frame is a TDLS setup response frame.

4. The method according to any one of claims 1 to 3, wherein the first capability element comprises at least one of the following: a transition delay, whether a 20 MHz bandwidth high data rate WUR physical layer protocol data unit PPDU is supported, or whether frequency division multiple access FDMA is supported; or
the second capability element comprises at least one of the following: whether a 20 MHz bandwidth high data rate WUR physical layer protocol data unit PPDU is supported or whether frequency division multiple access FDMA is supported.

5. The method according to any one of claims 2 to 4, wherein the operation element comprises at least one of the following: minimum wake-up duration, a time unit of a duty cycle period, a WUR operating class, a WUR channel, a transmission period of the link keep-alive frame, or an offset of transmission start time of the link keep-alive frame.

6. The method according to any one of claims 1 to 5, wherein the first mode element comprises at least one of the following: an action type field, WUR parameter control, a service period of a duty cycle period, a duty cycle period, or a proposed WUR parameter; or
the second mode element comprises at least one of the following: an action type field, a WUR mode response status, WUR parameter control, a WUR channel offset, or duty cycle period start time.

7. The method according to any one of claims 1 to 6, wherein the method further comprises:
receiving, by the AMP STA, the link keep-alive frame on a WUR link, and determining, based on the link keep-alive frame, that the WUR link is valid, wherein the link keep-alive frame comprises an identifier of the energizing STA.

8. The method according to any one of claims 1 to 7, wherein the method further comprises:
receiving, by the AMP STA, a link wake-up frame on the WUR link, wherein the link wake-up frame comprises an identifier of the AMP STA.

9. The method according to claim 7 or 8, wherein the identifier of the energizing STA is determined based on a medium access control MAC address of the energizing STA and cyclic redundancy check CRC, or the identifier of the AMP STA is determined based on a MAC address of the AMP STA and cyclic redundancy check CRC.

10. The method according to any one of claims 1 to 9, wherein the method further comprises:
receiving, by the AMP STA, a wireless power transfer WPT signal from the energizing STA.

11. The method according to any one of claims 1 to 10, wherein the method further comprises:
sending, by the AMP STA, a P2P WUR mode teardown indication to the energizing STA, wherein the P2P WUR mode teardown indication indicates to tear down the P2P WUR service; or
receiving, by the AMP STA, a P2P WUR mode teardown indication from the energizing STA, wherein the P2P WUR mode teardown indication indicates to tear down the P2P WUR service.

12. A communication method, wherein the method comprises:
receiving, by an energizing station STA, a setup request frame from an ambient power AMP STA by using an access point AP, wherein the setup request frame comprises a first capability element, and the first capability element indicates capability information of the AMP STA;
sending, by the energizing STA, a setup response frame to the AMP STA by using the AP, wherein the setup response frame comprises a second capability element, and the second capability element indicates capability information of the energizing STA;
receiving, by the energizing STA, a P2P WUR mode setup request frame from the AMP STA, wherein the P2P WUR mode setup request frame comprises a first mode element, and the first mode element indicates parameter information of a P2P WUR mode of the AMP STA; and
sending, by the energizing STA, a P2P WUR mode setup response frame to the AMP STA, wherein the P2P WUR mode setup response frame comprises a second mode element, and the second mode element indicates parameter information of a P2P WUR service provided by the energizing STA.

13. The method according to claim 12, wherein the setup response frame further comprises an operation element, and the operation element indicates operation information for transmitting a link keep-alive frame by the energizing STA.

14. The method according to claim 12 or 13, wherein the setup request frame is a tunneled direct link setup TDLS setup request frame, and the setup response frame is a TDLS setup response frame.

15. The method according to any one of claims 12 to 14, wherein the first capability element comprises at least one of the following: a transition delay, whether a 20 MHz bandwidth high data rate WUR physical layer protocol data unit PPDU is supported, or whether frequency division multiple access FDMA is supported; or
the second capability element comprises at least one of the following: whether a 20 MHz bandwidth high data rate WUR physical layer protocol data unit PPDU is supported or whether frequency division multiple access FDMA is supported.

16. The method according to any one of claims 13 to 15, wherein the operation element comprises at least one of the following: minimum wake-up duration, a time unit of a duty cycle period, a WUR operating class, a WUR channel, a transmission period of the link keep-alive frame, or an offset of transmission start time of the link keep-alive frame.

17. The method according to any one of claims 12 to 16, wherein the first mode element comprises at least one of the following: an action type field, WUR parameter control, a service period of a duty cycle period, a duty cycle period, or a proposed WUR parameter; or
the second mode element comprises at least one of the following: an action type field, a WUR mode response status, WUR parameter control, a WUR channel offset, or duty cycle period start time.

18. The method according to any one of claims 12 to 17, wherein the method further comprises:
sending the link keep-alive frame on a WUR link, wherein the link keep-alive frame comprises an identifier of the energizing STA.

19. The method according to any one of claims 12 to 18, wherein the method further comprises:
sending a link wake-up frame on the WUR link, wherein the link wake-up frame comprises an identifier of the AMP STA.

20. The method according to claim 18 or 19, wherein the identifier of the energizing STA is determined based on a medium access control MAC address of the energizing STA and cyclic redundancy check CRC, or the identifier of the AMP STA is determined based on a MAC address of the AMP STA and cyclic redundancy check CRC.

21. The method according to any one of claims 12 to 20, wherein the method further comprises:
sending, by the energizing STA, a wireless power transfer WPT signal to the AMP STA.

22. The method according to any one of claims 12 to 21, wherein the method further comprises:
receiving, by the energizing STA, a P2P WUR mode teardown indication from the AMP STA, wherein the P2P WUR mode teardown indication indicates to tear down the P2P WUR service; or
sending, by the energizing STA, a P2P WUR mode teardown indication to the AMP STA, wherein the P2P WUR mode teardown indication indicates to tear down the P2P WUR service.

23. A station STA, comprising a module configured to perform the method according to any one of claims 1 to 22.

24. A station STA, comprising a processor, wherein the processor is configured to perform the method according to any one of claims 1 to 22.

25. A station STA, comprising a logic circuit and an interface, wherein the logic circuit is coupled to the interface; and
the interface is configured to input and/or output information, and the logic circuit is configured to perform the method according to any one of claims 1 to 11, or the logic circuit is configured to perform the method according to any one of claims 12 to 22.

26. A computer-readable storage medium, wherein the computer-readable storage medium is configured to store a computer program, and when the computer program is executed, the method according to any one of claims 1 to 22 is performed.

27. A computer program product, wherein when the computer program product is executed, the method according to any one of claims 1 to 22 is performed.

28. A communication system, wherein the communication system comprises an ambient power station AMP STA and an energizing STA, the AMP STA is configured to perform the method according to any one of claims 1 to 11, and the energizing STA is configured to perform the method according to any one of claims 12 to 22.
